# EUROPEAN PATENT APPLICATION

(11) **EP 4 564 081 A1**
(43) Date of publication of application: **04.06.2025**
(21) Application number: 24816896.5
(22) Date of filing: 14.05.2024
(51) Int. Cl.: G02B 30/27, G02B 30/30, G02B 30/36, G02B 30/56, G02B 30/50, G02B 30/25

(54) **LIGHT-FIELD DISPLAY SYSTEM AND DISPLAY METHOD THEREFOR**

(30) Priority: 26.09.2023 CN 202311253144; 19.10.2023 CN 202311363817
(71) Applicant: Faith Billion Technology Development Limited, Wanchai, Hong Kong 999077 (HK)
(72) Inventor: LU, Zengxiang, Beijing 100084 (CN)
(74) Representative: Zacco Sweden AB
(86) International application number: PCT/CN2024/093025
(87) International publication number: WO 2025/066166

(57) **Abstract**

Provided are a light field display system and a display method for a light field display system. The light field display system includes multiple display sub-units (1), a unidirectional scattering film (2), and a control component. The multiple display sub-units (1) are arranged in a honeycomb shape. Each display sub-unit (1) includes a circular rotating structure (11) and at least one first projection component (12) disposed on the edge of the rotating structure (11). Each first projection component (12) includes multiple sub-pixels, and at least one first projection component (12) is configured to project, in a preset direction, the emitted light of a sub-pixel in the at least one first projection component (12) onto an imaging surface (14) to form a first display sub-pixel. The unidirectional scattering film (2) is disposed on a side of the light emission surface of at least one display sub-unit (1), and the unidirectional scattering film (2) is configured to expand the emitted light of the at least one display sub-unit (1) in a first direction. The control component is built inside the rotating structure (11) and is electrically connected to the at least one display sub-unit (1). The control component is configured to control the rotation of the rotating structure (11) and control the display of at least one sub-pixel.

## Description

This application claims priority to Chinese Patent Application No. 202311363817.0 filed with the China National Intellectual Property Administration (CNIPA) on Oct. 19, 2023, the disclosure of which is incorporated herein by reference in its entirety.

### TECHNICAL FIELD

The present application relates to the field of light field display technology, for example, a light field display system and a display method for a light field display system.

### BACKGROUND

Light field display systems can achieve naked-eye 3D (three-dimensional) display effects and have important applications in modern display technology.

However, in the naked-eye 3D display system in the related art, the lenticular grating is arranged in the horizontal direction, and a liquid crystal display panel is arranged below the lenticular grating. In this 3D display system, the lenticular grating is used to differentiate viewpoints by deflecting light emitted from different sub-pixels of the liquid crystal display panel in different directions, thus enabling different light rays to enter human eyes and thereby achieving stereoscopic display. However, in this solution, the number of viewpoints is limited by the pixel size of the liquid crystal display panel and the pitch of the lenticular lens array. The more liquid crystal pixels beneath a single lenticular lens, the greater the number of viewpoints. Currently, the color pixel size of a liquid crystal panel is generally around 0.2 mm. Under the premise of a fixed pixel size of the liquid crystal panel, a larger pitch of the lenticular grating allows for more viewpoints. However, the pitch of the lenticular grating determines the resolution of the display pixels. Therefore, in this solution, the number of viewpoints and the resolution are conflicting parameters, and a trade-off is required to be made. Additionally, the viewpoints in this 3D display system are discontinuous, and the human eyes can only see the complete display at certain viewpoints, which limits the further application of the 3D display system.

### SUMMARY

The present application provides a light field display system and a display method for a light field display system to enable the light field display system to have continuous viewpoints.

The present application provides a light field display system. The system includes multiple display sub-units, a unidirectional scattering film, and a control component.

The multiple display sub-units are arranged in a honeycomb shape. Each display sub-unit includes a circular rotating structure and at least one first projection component disposed on the edge of the rotating structure. Each first projection component includes multiple sub-pixels. The at least one first projection component is configured to project, in a preset direction, emitted light of a sub-pixel in the at least one first projection component onto an imaging surface to form a first display sub-pixel.

The unidirectional scattering film is disposed on a side of a light emission surface of at least one display sub-unit. The unidirectional scattering film is configured to expand emitted light of the at least one display sub-unit in a first direction.

The control component is built inside the rotating structure and is electrically connected to the at least one display sub-unit. The control component is configured to control rotation of the rotating structure and control display of at least one sub-pixel.

The present application provides a display method for a light field display system. The method includes the following: determining parameters required for the light field display system to display an image at a preset display resolution; and determining display sub-pixels of multiple display sub-units included in the light field display system, display positions of the multiple display sub-units, and display moments of the multiple display sub-units according to the parameters.

The light field display system is the light field display system described in any of the preceding embodiments.

### BRIEF DESCRIPTION OF DRAWINGS

The drawings used in the description of the embodiments of the present application will be briefly described below. The drawings described below are only part of the drawings of the present application.
FIG. 1 is a schematic diagram of the relative positional relationship between a first projection component and a unidirectional scattering film of a light field display system according to an embodiment of the present application.
FIG. 2 is a schematic diagram illustrating that different display sub-units of a light field display system provide light beams at different angles for the same display pixel according to an embodiment of the present application.
FIG. 3 is a schematic diagram of beam expansion in a light field display system according to an embodiment of the present application.
FIG. 4 is a schematic diagram of the arrangement of multiple display sub-units according to an embodiment of the present application.
FIG. 5 is a schematic diagram illustrating the structure of a display sub-unit according to an embodiment of the present application.
FIG. 6 is a schematic diagram illustrating the structure of a lenticular grating according to an embodiment of the present application.
FIG. 7 is a schematic diagram illustrating the structure of another display sub-unit according to an embodiment of the present application.
FIG. 8 is a schematic diagram illustrating the structure of a display light pole according to an embodiment of the present application.
FIG. 9 is a schematic diagram of a positional relationship between multiple display sub-units and a display projection line according to an embodiment of the present application.
FIG. 10 is an enlarged schematic diagram of a single display sub-unit in FIG. 9.
FIG. 11 is a schematic diagram of an imaging coverage region of a projection component in a display sub-unit.
FIG. 12 is a schematic diagram illustrating that a light field display system displays a straight line in a projection region of two adjacent display sub-units according to an embodiment of the present application.
FIG. 13 is another schematic diagram illustrating that a light field display system displays a straight line in the projection region of two adjacent display sub-units according to an embodiment of the present application.
FIG. 14 is another schematic diagram illustrating that a light field display system displays a straight line in the projection region of two adjacent display sub-units according to an embodiment of the present application.
FIG. 15 is a schematic diagram illustrating the structure of a deflection component according to an embodiment of the present application.
FIG. 16 is a schematic diagram illustrating the structure of another light field display system according to an embodiment of the present application.
FIG. 17 is a schematic diagram illustrating the structure of a deflection unit according to an embodiment of the present application.
FIG. 18 is a schematic diagram of a positional relationship between a deflection component and display sub-units according to an embodiment of the present application.
FIG. 19 is a schematic diagram of a positional relationship between two adjacent display sub-units in two adjacent rows and the deflection component in FIG. 18.
FIG. 20 is a schematic diagram illustrating the structure of a first deflection film according to an embodiment of the present application.
FIG. 21 is a schematic diagram illustrating the structure of a second deflection film according to an embodiment of the present application.
FIG. 22 is a schematic diagram of another positional relationship between a deflection component and display sub-units according to an embodiment of the present application.
FIG. 23 is a schematic diagram of a positional relationship between two adjacent display sub-units in two adjacent rows and the deflection component in FIG. 22.
FIG. 24 is a schematic diagram illustrating the structure of another light field display system according to an embodiment of the present application.
FIG. 25 is a schematic diagram illustrating the structure of another light field display system according to an embodiment of the present application.
FIG. 26 is a diagram illustrating the principle of expanding a viewing angle using a reflector according to an embodiment of the present application.
FIG. 27 is a schematic diagram illustrating the structure of another light field display system according to an embodiment of the present application.
FIG. 28 is a schematic diagram illustrating the structure of another light field display system according to an embodiment of the present application.
FIG. 29 is a flowchart of a display method for a light field display system according to an embodiment of the present application.

### DETAILED DESCRIPTION

Technical solutions in the embodiments of the present application will be described in conjunction with the drawings in the embodiments of the present application. The embodiments described below are part, not all, of the embodiments of the present application. Based on the embodiments of the present application, all other embodiments acquired by those of ordinary skill in the art without creative work are within the scope of the present application.

The terms such as "first" and "second" in the description, claims, and preceding drawings of the present application are used to distinguish between similar objects and are not necessarily used for describing a particular order or sequence. It should be understood that the data used in this manner is interchangeable where appropriate so that the embodiments of the present application described herein may also be implemented in a sequence not illustrated or described herein. Additionally, terms "comprising", "including", and any other variations thereof are intended to encompass a non-exclusive inclusion. For example, in addition to a process, method, system, product, or device that includes a series of steps or units illustrated in the embodiments of the present application, other processes, methods, systems, products, or devices that do not explicitly list this series of steps or units, or other steps or units inherent to such a process, methods, system, product, or device, may also be included.

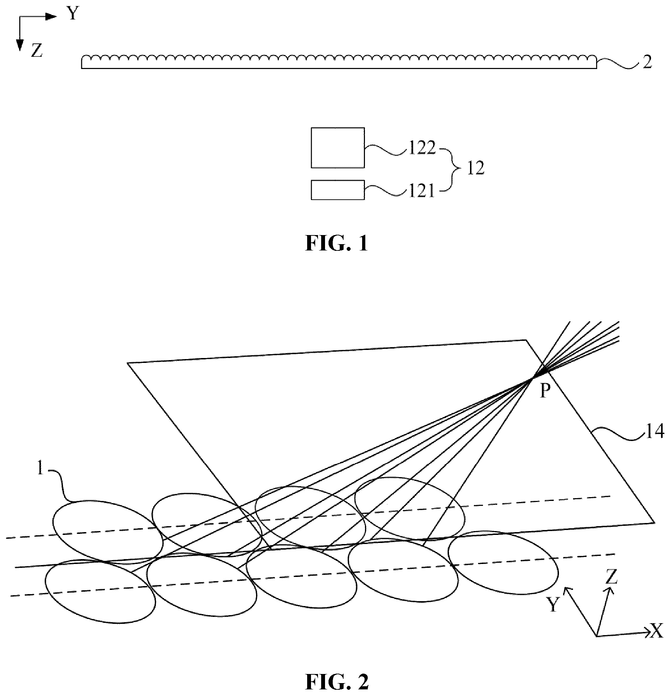

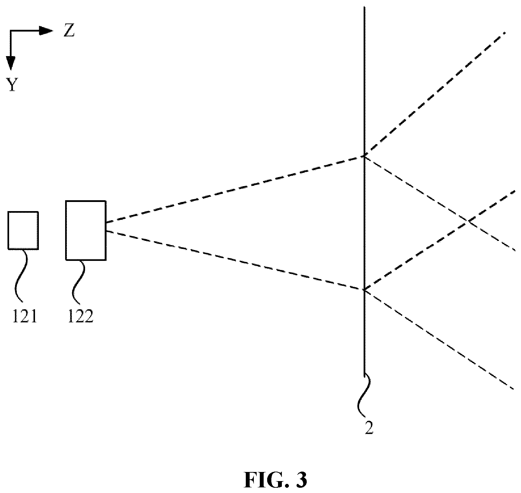

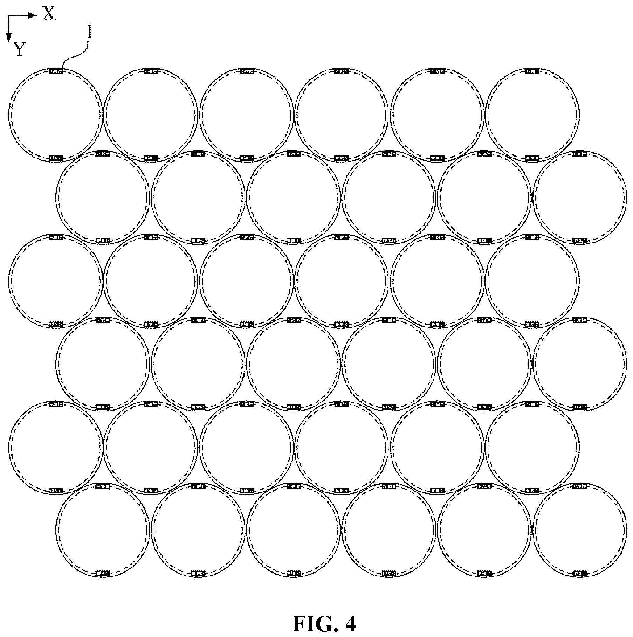

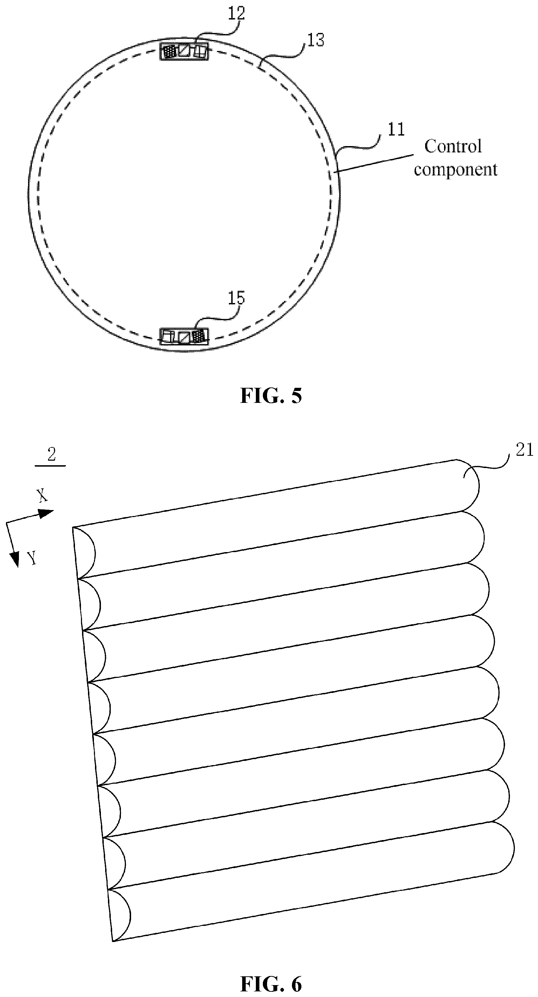

FIG. 1 is a schematic diagram of the relative positional relationship between a first projection component and a unidirectional scattering film of a light field display system according to an embodiment of the present application. FIG. 2 is a schematic diagram illustrating that different display sub-units of a light field display system provide light beams at different angles for the same display pixel according to an embodiment of the present application. FIG. 3 is a schematic diagram of beam expansion in a light field display system according to an embodiment of the present application. FIG. 4 is a schematic diagram of the arrangement of multiple display sub-units according to an embodiment of the present application. FIG. 5 is a schematic diagram illustrating the structure of a display sub-unit according to an embodiment of the present application. In combination with FIG. 1 to FIG. 5, the light field display system includes multiple display sub-units 1 arranged in a honeycomb shape, a unidirectional scattering film 2, and a control component. Each display sub-unit 1 includes a circular rotating structure 11 and at least one first projection component 12 disposed on the edge of the rotating structure 11, each first projection component 12 includes multiple sub-pixels, and the at least one first projection component 12 is configured to project, in a preset direction, emitted light of a sub-pixel in the at least one first projection component onto an imaging surface 14 to form a first display sub-pixel, where the imaging surface 14 may be on the unidirectional scattering film 2 or outside the unidirectional scattering film 2. The unidirectional scattering film 2 is disposed on a side of the light emission surface of at least one display sub-unit 1, and the unidirectional scattering film 2 is configured to expand emitted light of the at least one display sub-unit 1 in a first direction. The control component is electrically connected to at least one display sub-unit 1 and is configured to control rotation of the rotating structure and control display of at least one sub-pixel.

Illustratively, a three-dimensional space consisting of a first direction Y, a second direction X, and a third direction Z is defined, the preceding three directions are mutually perpendicular in pairs, the second direction X may be a horizontal direction, and the display sub-units 1 and the unidirectional scattering film 2 are arranged in the third direction Z. The rotating structure 11 of the display sub-unit 1 is disk-shaped, and the rotating structure 11 may rotate around the center of the display sub-unit 1. Multiple display sub-units 1 form a honeycomb structure. Any two adjacent display sub-units 1 are almost tangent to each other, and a gap exists between adjacent display sub-units 1 to avoid mutual influence during rotation. The gap is greater than zero and may be less than 1 mm so that the coverage of the emitted light of the multiple display sub-units on the imaging surface 14 can be increased. Thus, the display sub-pixels on the imaging surface 14 can have a higher resolution. A first projection component 12 is arranged at the edge of the rotating structure 11. The first projection component 12 is a high-speed projection component and includes multiple sub-pixels. The multiple sub-pixels may be disposed on a display device 121. The display device 121 is, for example, a dense display device, such as a microLED display panel, an organic light-emitting diode (OLED) display panel, a high-speed digital light processing (DLP) display panel, or a liquid crystal on silicon (LCoS) display panel. A sub-pixel on the display device 121 is projected onto the imaging surface 14 to form a first display sub-pixel. Each sub-pixel on the display device 121, at a different position on the display device 121, may provide a light beam in one direction for a different display sub-pixel. The first projection component 12 has multiple sub-pixels, and the light emitted by each sub-pixel is projected in a preset direction. The first projection component 12 may be understood as a vector pixel or a tensor pixel. The definitions of the vector pixel are as follows: 1. A point light source with a narrow light beam. Compared with a larger display scale, the vector pixel can be approximately regarded as a point-emitting light source (for example, a light source occupies less than one ten-thousandth of the display area). Most of the light beams emitted into space by the point light source with the narrow light beam have the following properties: If the boundary of a beam is defined as the point where the light intensity decreases to 50% of the maximum intensity of the beam, with the light source as the center, the minimum spatial solid angle that can include all boundaries is less than 10 degrees. 2. Capable of projecting the preceding light beams in no less than 100 distinguishable directions. 3. Capable of emitting the preceding light beams in two or more directions simultaneously. 4. The brightness of the preceding light beams supports at least 16 levels of adjustment. The definition of the tensor pixel is as follows: A tensor is a multi-linear map defined on a Cartesian product of a vector space or a dual space, where the coordinates of the tensor are quantities in an |n|-dimensional space with |n| components, and each component is a function of the coordinates. Upon a coordinate transformation, these components are also linearly transformed according to certain rules. As for the tensor pixel, it refers to a pixel unit formed by an array of independently controllable display devices, which form images at different planes in space through optical components. A tensor pixel is a pixel unit in a three-dimensional coordinate space, where different tensor pixels are located not only at different positions in a two-dimensional plane space but also at different positions in the longitudinal space. Therefore, a 3D image may be formed by tensor pixels. Here, the tensor pixel may be a virtual image formed by an optical component or a real image.

The basic display principle of the present application is briefly described with reference to FIG. 2. An example is used in FIG. 2 for explanation where the composition of a single first display sub-pixel P is illustrated and the first projection component is a vector pixel (at this time, a single one imaging surface 14 is provided). During display, the rotating structure 11 on the display sub-unit 1 rotates to drive the first projection component 12 to rotate. When the first projection component 12 on the display sub-unit 1 rotates to a position, a sub-pixel thereon is controlled to emit light, thereby providing a first display sub-pixel P on the imaging surface 14 with a viewing angle in the second direction X. When one eye of a person is on the direction of emitted light of this sub-pixel, the human eye can see the first display sub-pixel P, and when the first projection component 12 on other display sub-units 1 moves to a position, a sub-pixel thereon can irradiate the first display sub-pixel P with emitted light at another angle, thereby providing the first display sub-pixel P with another viewing angle in the second direction X. Multiple display sub-units 1 provide the first display sub-pixel P with viewing angles from multiple directions so that the first display sub-pixel P has a larger viewing angle in the second direction X. Other sub-pixels in the first projection component 12 may form other first display sub-pixels on the imaging surface 14 so that a complete image is formed on the imaging surface 14 through multiple first display sub-pixels. For vector pixels, different images may be sent to the left and right eyes of a person, that is, different sub-pixels emit light to provide an image with binocular observation for the left and right eyes, thereby forming a stereo display. For tensor pixels, images with parallax may be formed on different imaging surfaces so that the human eyes can feel the depth information of the images, thereby achieving a stereoscopic display.

In this embodiment, the display sub-units located in two adjacent rows in the second direction X may be configured to provide emitted light to the first display sub-pixels located in the same row or the same rows in the imaging surface 14; for the first direction Y and the second direction X, the viewing angles are both relatively small, but a narrow light beam is required in the second direction X to form a binocular parallax display, while the narrow light beam in the first direction Y may cause the directional angles of the sub-pixel beams in the first direction Y to differ, and thus human eyes see different sub-pixels at different positions and cannot see most of the sub-pixels in the first direction Y. By providing the unidirectional scattering film 2, the emitted light is expanded in the first direction Y so that the first display sub-pixel with a small viewing angle in the first direction Y can be expanded to a large viewing angle, and the human eyes can see the first display sub-pixel when moving within a larger range in the first direction Y. Since each first display sub-pixel in the first direction Y is expanded, the human eyes can also see more or even all display sub-pixels located in the same column in the first direction Y, that is, the human eyes can see more or even all display sub-pixels in a larger range. Thus, the light field display system of this embodiment has more continuous viewpoints.

In addition, in this embodiment, each display sub-unit may correspond to a control component, and the control component is configured to control the rotation speed of the corresponding display sub-unit and the display of the sub-pixels according to a control signal. Optionally, the rotating structure includes a housing, and the control component is disposed in the housing. In some other embodiments, one control component may also control the rotation speed of all display sub-units, and the housing of a display sub-unit only has a built-in control component for controlling the display of the sub-pixels of the corresponding display sub-unit.

The technical solution of this embodiment adopts a light field display system. The light field display system includes multiple display sub-units, a unidirectional scattering film, a control component, and a calibration module. The multiple display sub-units are arranged in a honeycomb shape. Each display sub-unit includes a circular rotating structure and at least one first projection component disposed on the edge of the rotating structure. Each first projection component includes multiple sub-pixels. The at least one first projection component is configured to project, in a preset direction, emitted light of a sub-pixel onto an imaging surface to form a first display sub-pixel. The unidirectional scattering film is disposed on a side of the light emission surface of at least one display sub-unit. The unidirectional scattering film is configured to expand emitted light of the display sub-unit in a first direction. The control component is electrically connected to the at least one display sub-unit. The control component is configured to control the rotation of the rotating structure and control the display of at least one sub-pixel. The calibration module is configured to determine parameters required for the light field display system to display an image at a preset resolution according to a viewing position, and the parameters include a display direction angle and a display moment of a display sub-unit corresponding to the displayed image. The unidirectional scattering film is provided so that the light emitted by the first projection component is expanded in the first direction. Thus, the human eyes can see more or all of the first display sub-pixels when moving in the first direction, that is, more continuous viewpoints are provided.

Optionally, the light field display system also includes a calibration module, the calibration module is configured to determine parameters required for the light field display system to display an image at a preset resolution according to a viewing position, and the parameters include a display direction angle and a display moment of a display sub-unit corresponding to the displayed image. The parameters may be calculated by a calibration system or transmitted externally. Before display, the calibration module may be used for calibration, thereby acquiring a complete set of parameters required for displaying an image. The specific calibration method is to be described later.

Optionally, the first projection component 12 includes a display device 121 and a projection lens 122, and the projection lens 122 is located between the display device 121 and the unidirectional scattering film 2. When the first projection component 12 is a vector pixel, the projection lens 122 may be provided with only one focus, and the projection lens 122 projects the sub-pixel on the display device 121 onto an imaging surface. When the first projection component 12 is a tensor pixel, the projection lens 122 may be provided with two focuses to project the emitted light of the sub-pixel on the display device 121 onto different imaging surfaces, thereby achieving the stereoscopic display through the differences of the images on different imaging surfaces.

Optionally, the imaging surface 14 may be a real image or a virtual image, and this embodiment of the present application does not impose any specific limitation on this.

Optionally, a driving method for the display sub-unit 1 may be as follows: Each display sub-unit 1 corresponds to an independent driving motor, such as a printed circuit board (PCB) motor; or multiple display sub-units 1 may be driven by the same electrode through belts or gears; or when the display sub-units 1 constitute a display light pole (to be described later), the display sub-units on the same or several display light poles may rotate simultaneously through belts or gears. The frequency and phase of the rotation of the rotating structure 11 in each display sub-unit do not need to be strictly controlled. The control component only needs to know the precise frequency and phase of each rotating structure and can ensure synchronization with the display content using algorithms. Thus, when the rotating structure 11 of the display sub-unit 1 rotates to a preset position, the display of sub-pixels can be controlled. Each display sub-unit 1 may have an independent power supply and communication system, and the optional method may be, for example, powering or communicating through a slip ring or wirelessly.

Optionally, FIG. 6 is a schematic diagram illustrating the structure of a lenticular grating according to an embodiment of the present application. With reference to FIG. 1 to 6, the unidirectional scattering film 2 includes a lenticular grating, and the lenticular grating includes multiple cylindrical lenses 21 arranged in the first direction Y and extending in the second direction X.

The lenticular grating can expand the emitted light incident thereon unidirectionally in the arrangement direction of the cylindrical lenses 21. The plane where the lenticular grating is located is parallel to a plane where an optical center of the projection lens 122 in the first projection component rotates. A distance between the plane where the optical center rotates and the imaging surface determines the size of the coverage area of the light emitted by a single projection lens 122. The unidirectional scattering film 2 may also be another film that can expand the light beam unidirectionally. In addition, the unidirectional expanding angle of the lenticular grating in the first direction Y determines the viewing angle of the human eyes in the first direction Y.

Optionally, with reference to FIG. 5, a display sub-unit 1 includes 2n first projection components arranged on the rotating structure, the 2n first projection components are opposite two-by-two in a radial direction of the display sub-unit 1, and distances from any two adjacent or opposite first projection components to the center of the display sub-unit 1 are different and less than a second preset value; where n is a positive integer.

Illustratively, two first projection components opposite to each other in the radial direction may be defined as the 1^{st} first projection component 12 and the 2^{nd} first projection component 15, respectively; the 2^{nd} first projection component 15 is slightly misaligned with the 1^{st} first projection component 12 in the radial direction of the rotating structure 11 so that the first display sub-pixel formed by the projection of the 2^{nd} first projection component 15 and the first display sub-pixel formed by the projection of the 1^{st} first projection component 12 are misaligned. For example, in two rows of display sub-units in the second direction Y, the 1^{st} first projection components located in the same row project to form one row of first display sub-pixels, and the 2^{nd} first projection components located in the same row 15 project to form one row of first display sub-pixels; on the imaging surface, the first display sub-pixels formed by the projection of the 1^{st} first projection components 12 and the first display sub-pixels formed by the projection of the 2^{nd} first projection components 15 are located in different rows, which can increase the number of display sub-pixels per unit area on the imaging surface, thereby improving the display resolution. In addition, the display sub-pixels in different rows may also be driven in an odd-even interlaced scanning manner, thereby reducing the flicker of a display image. In addition, the plane where the optical center of the 2^{nd} first projection component moves and the plane where the optical center of the 1^{st} first projection component moves may be the same or different. The radius of the rotation trajectory of the 2^{nd} first projection component (that is, the distance to the center) is slightly different from the radius of the rotation trajectory of the 1^{st} first projection component. For example, the difference of the radius is (n + 1/2) times the size of a sub-pixel.

In some other embodiments, the distances from any two adjacent or opposite first projection components to the center of the display sub-unit may be set to be equal, thereby increasing the brightness and reducing the rotation speed of the display sub-unit.

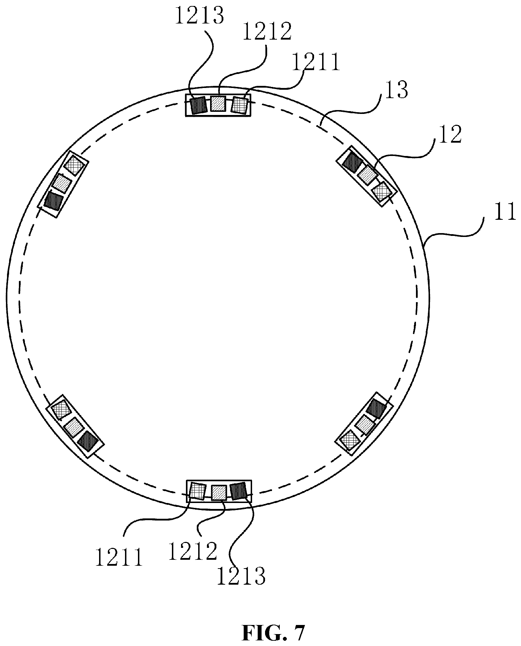

Optionally, FIG. 7 is a schematic diagram illustrating the structure of another display sub-unit according to an embodiment of the present application. With reference to FIG. 7, other projection components may also be disposed on the display sub-unit 1, and adjacent or radially opposite projection components on the rotating structure may be set with an offset in the radial direction of the rotating structure, thereby achieving interlaced scanning to increase the display resolution, or to reduce rotation speed and increase display brightness. The installation of the projection components on the display sub-unit should ideally satisfy the requirements of mechanical balance. If the requirements cannot be satisfied, counterweights may be added to the rotating structure to ensure balance.

In some embodiments, optionally, the projection components in a display sub-unit include a multicolor display device, and the multicolor display device includes sub-pixels of multiple different emission colors.

Each projection component may include a display device. The display device is a multicolor display device and may include three color sub-pixels, that is, a red sub-pixel, a green sub-pixel, and a blue sub-pixel. Different color sub-pixels on the multicolor display device emit light to form a color image.

In some other embodiments, optionally, with continued reference to FIG. 7, the projection components on the display sub-unit include multiple monochrome display devices, each monochrome display device includes sub-pixels of the same emission color, sub-pixels on different monochrome display devices in the same first projection component have different emission colors, and in the rotation direction of the rotating structure 11, the arrangement order of the multiple monochrome display devices in each first projection component is the same.

Illustratively, each projection component may include three monochrome display devices, namely, a red display device 1211, a green display device 1212, and a blue display device 1213; the three monochrome display devices in the same projection component are installed as adjacent to each other as possible or they may be separated by a certain angle. When the rotating structure 11 rotates, the color matching and image display of the pixels on the imaging surface are achieved through the persistence of vision effect by controlling the lighting moment of the sub-pixels in each monochrome display device. In the rotation direction of the rotating structure, the arrangement order of the monochrome display devices in each projection component is the same. That is, if the arrangement order of the monochrome display devices in a projection component in the rotation direction is the red display device 1211, the green display device 1212, and the blue display device 1213 sequentially, the arrangement order of the monochrome display devices in all projection components in the rotation direction is the red display device 1211, the green display device 1212, and the blue display device 1213 sequentially. This arrangement ensures that the arrangement of the sub-pixels in the pixels (including the red sub-pixels, the blue sub-pixels, and the green sub-pixels) formed when the rotating structure 11 rotates can be consistent, which is conducive to reducing the difficulty of processing display data.

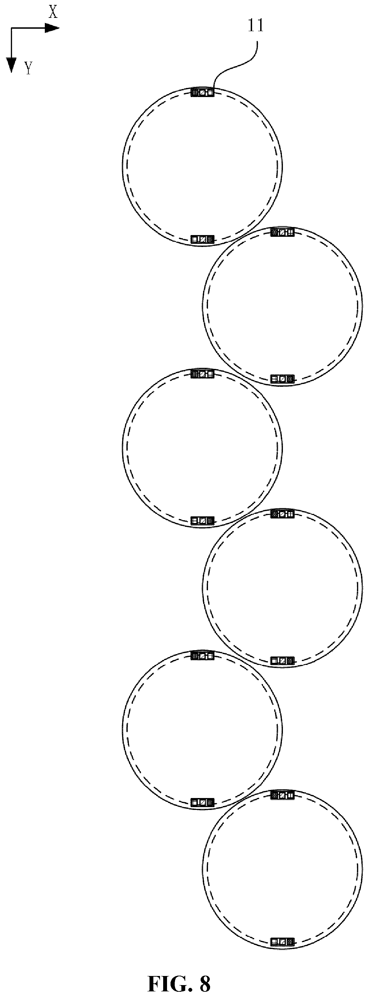

Optionally, FIG. 8 is a schematic diagram illustrating the structure of a display light pole according to an embodiment of the present application. With reference to FIG. 8, the light field display system also includes multiple display light poles, and display sub-units located in two adjacent columns in the second direction X are fixed on the same display light pole.

As shown in FIG. 8, two columns of display sub-units may be spliced into one display light pole, and a line connecting the centers of two adjacent display sub-units on the display light pole has an angle of 30 degrees with the first direction Y. This arrangement can ensure that each display sub-unit is almost tangent to the display sub-unit adjacent to the display sub-unit. In this embodiment, the light field display system includes a display, the display includes multiple display light poles arranged in the second direction, each display light pole includes multiple display sub-units arranged in the first direction, and the multiple display light poles are arranged to form the multiple display sub-units in the honeycomb shape.

Optionally, the display light poles may be spliced without restriction, and multiple display light poles may be spliced into a plane or a curved surface.

Optionally, the display sub-units on each display light pole may be controlled to rotate by the same motor via belt transmission.

The driving principle of the light field display system of the embodiment of the present application is described below in combination with embodiments.

First, the display principle of the light field display system in the second direction X is introduced, that is, how to form a row of display sub-pixels is introduced.

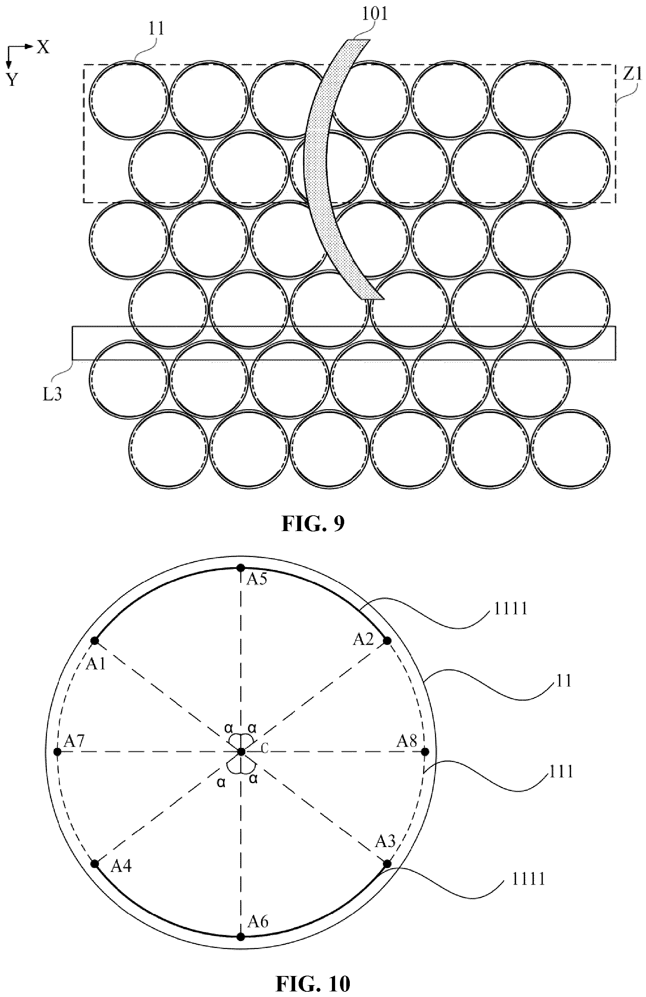

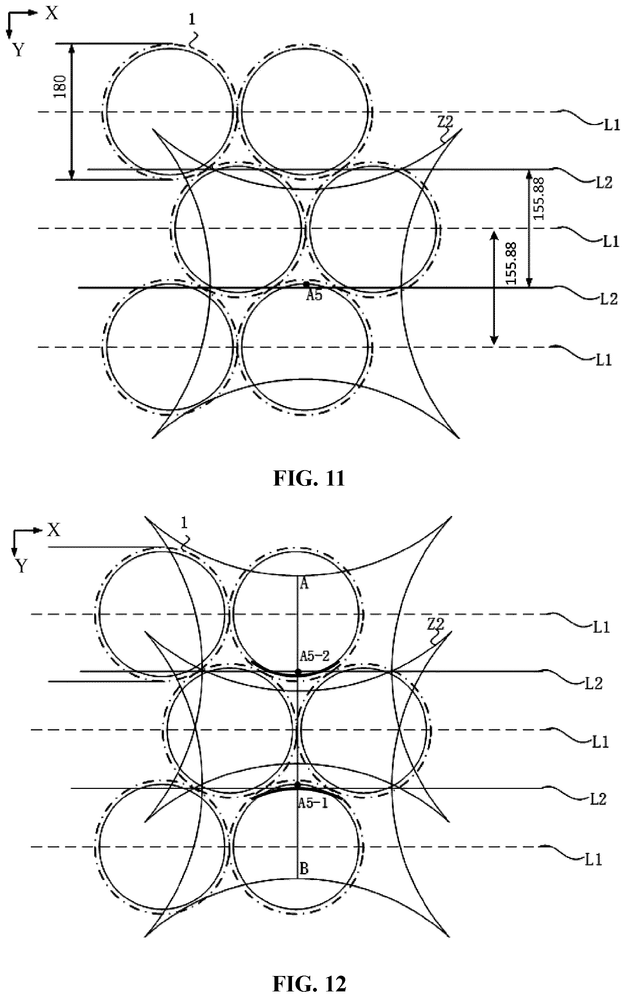

FIG. 9 is a schematic diagram of a positional relationship between multiple display sub-units and a display projection line according to an embodiment of the present application. FIG. 10 is an enlarged schematic diagram of a single display sub-unit in FIG. 9. FIG. 11 is a schematic diagram of the imaging coverage region of a projection component in a display sub-unit. Reference is made to FIGS. 9 to 11. First, with reference to FIG. 10, the rotation trajectory 111 of a first projection component includes a first trajectory point A1, a second trajectory point A2, a third trajectory point A3, and a fourth trajectory point A4; the angle between a line connecting each trajectory point and the center C of the rotation trajectory 111 and a first diameter of the rotation trajectory 111 is a preset angle α, and the first diameter is parallel to the first direction Y; the first trajectory point A1 and the fourth trajectory point A4 are located on a first side of the first diameter, the second trajectory point A2 and the third trajectory point A3 are located on a second side of the first diameter, the first trajectory point A1 is adjacent to the second trajectory point A2, and the fourth trajectory point A4 is adjacent to the third trajectory point A3. The preset angle α is greater than or equal to 30 degrees, and the preset angles α corresponding to different trajectory points may be the same or different. The first diameter intersects with the rotation trajectory 111 at a fifth trajectory point A5 and a sixth trajectory point A6, the fifth trajectory point A5 is located on a short trajectory between the first trajectory point A1 and the second trajectory point A2, and the sixth trajectory point A6 is located on a short trajectory between the third trajectory point A3 and the fourth trajectory point A4. With reference to FIG. 11, the dotted line L1 in FIG. 11 is a line connecting the centers of the display sub-units 1 of the same row in the second direction X, and the solid line L2 is a midline between two adjacent dotted lines L1. An example is used where the imaging surface is on the lenticular grating. The focal length f of a projection lens is equal to 3.06 mm. The size of a sub-pixel in a display device is 24.3 um. The luminous region inside the sub-pixel is 12 um. To have a better display at a viewing distance of 1 m, the size of a display sub-pixel imaged to the film of the lenticular grating is 1.1 mm, and the imaging magnification M of the sub-pixel is equal to 45 times (1.1/0.0243). When the projection components of the display sub-unit are radially misaligned, interlaced scanning may be performed, and the size of the display sub-pixel is equivalent to 0.55 mm. At this time, according to the imaging formula that (v = f*(M + 1)), the imaging distance V = 140 mm, and the theoretical calculation value of the field of view-horizontal (FOVH) of the projection lens is 2*(K/2/f), where K denotes a side length of the display device, and f denotes the focal length of the projection lens. When k = 4.6 mm, and f = 3.06 mm, FOVH = 73 degrees, due to the distortion of the projection lens, the measured FOVH of the projection lens is 84 degrees when imaging on the film of the lenticular grating at a distance of 140 mm, and the average size of the display sub-pixels imaged on the film of the lenticular grating is 1.3 mm. The average actual size of the display sub-pixels in interlaced scanning display is around 0.65 mm. At this time, the area covered by the projection lens on the film of the lenticular grating is about 252 mm*252 mm, but some distortion exists at the focus position of the display region, making the horizontal and vertical spacing of the corner points greater than 252 mm. As shown in FIG. 11, the diameter of the rotating structure in the display sub-unit 1 is 180 mm (this value is based on the consideration that the currently used control component can be installed in the disk), the distance between the centers of adjacent rotating structures in the horizontal direction is 180 mm, the distance between the centers of adjacent rotating structures in the vertical direction is about 155.88 mm, the diameter of the projection lens is 14 mm, the diameter of the trajectory circle (shown by the dotted line) where the trajectory of the center of the projection lens is located is 166 mm, the projection coverage area (the imaging coverage region of the projection component on the lenticular grating) is defined as a projection plane Z2 determined by the area enclosed by four corner points spaced 405 mm apart, as shown in the figure, and the minimum projection distance of the boundary points of the projection plane Z2 in both the vertical and horizontal directions is 252 mm. The projection surface Z2 shown in FIG. 11 is the projection surface formed by the first projection component in the display sub-unit at the bottom right corner when the first projection component is at the fifth trajectory point A5.

It can be concluded from FIG. 11 and FIG. 10 that when the first projection components of a row of display sub-units move on the short trajectory between the first trajectory point A1 and the second trajectory point A2, the projection surfaces of the first projection components are closer to the position of the projection surface at the fifth trajectory point A5 when the first projection components are at a trajectory point closer to the fifth trajectory point; in another row of display sub-units, a short trajectory between the third trajectory point A3 and the fourth trajectory point A4 exists, and the short trajectory between the first trajectory point A1 and the second trajectory point A2 in one row of display sub-units is adjacent to the short trajectory between the third trajectory point A3 and the fourth trajectory point A4 in another row of display sub-units. When the first projection components of another row of display sub-units move on the short trajectory between the third trajectory point A3 and the fourth trajectory point A4, the projection surfaces of the projection components are also adjacent to the position of the projection surface Z2 in the figure. However, the position difference in the second direction X is large while the difference in the first direction Y is small. Therefore, it can be considered that when the projection components of two adjacent rows of display sub-units in the second direction X move on adjacent short trajectories, it is equivalent to a single projection component on a straight line (defined as an equivalent short trajectory straight line L3). Then, the display region managed by the projection components of adjacent rows of display sub-units in the X-direction while moving along adjacent short trajectories is the region determined by the rectangle Z1 in FIG. 9, where the straight line extending from the rectangle Z1 in the second direction X is the solid line L2 in FIG. 11. When it is necessary to display a straight line extending in the second direction X, the projection components moving on the equivalent short trajectory straight line L3 may be controlled to project onto the imaging surface, and different sub-pixels can provide different viewing angles or provide different display sub-pixels.

According to the principle of light reversibility, when the human eye views the display content of the first projection component through the unidirectional scattering film, it is equivalent to emitting thin light beams from the position of the human eye toward the unidirectional scattering film according to a viewing angle Q. After passing through the lenticular grating, this thin light beam becomes a planar light beam. Since an angle exists between the human eye and the unidirectional scattering film, the planar light beam bends, and the projection on the surface array of display sub-units is a curved line. The curved line is defined as a display projection line 101. The width of the display projection line 101 is related to the divergence angle of the light emitted from the projection lens, the length of the display projection line 101 is related to the curvature radius of the grating, and the degree of curvature of the display projection line 101 is related to the angle at which the human eye views the grating. When the display projection line 101 has an intersection with the movement trajectory of the projection component on the display sub-unit, it indicates that when the projection component moves to the intersection, the sub-pixels can provide a light beam in the Q direction to the human eye, where the maximum value Q is FOVH/2 of the projection lens. To ensure the completeness of the light emission angle of the display sub-pixels, it is necessary to meet the requirement that the display projection line, at any observation point and any angle, can have at least one intersection with the movement trajectory of the projection component in the display sub-unit. The completeness of the light emission angle indicates that when viewing is performed within a designed viewing region, no missing points exist within the designed display area at a given design resolution.

Through the preceding analysis, it can be seen that when the projection components of two adjacent rows of display sub-units in the second direction X move on adjacent short trajectories, the display region that the projection components are responsible for is the region determined by the rectangle Z1 in FIG. 9, and then the display projection line 101, when moving in the rectangular region, inevitably overlaps the equivalent short trajectory straight line of the projection components. Moreover, the rectangles Z1 corresponding to two adjacent equivalent short trajectory straight lines L3 overlap, and the degree of overlap is determined by the field of view (FOV) of the projection lens. In addition, since the display projection line 101 has a width, when the FOV of the projection lens is relatively large and the display projection line 101 is bent to a large extent, resulting in only partial overlap between the display projection line 101 and the equivalent short trajectory straight line L3, the projection component can provide a display light beam with a larger viewing angle for the observation point.

The principle of display of the light field display system in the first direction Y is described below.

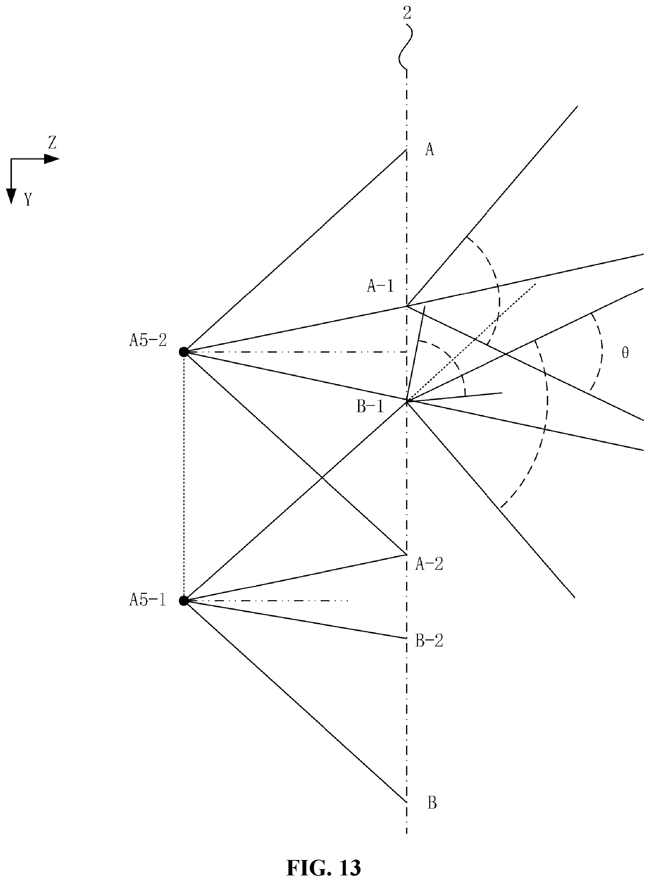

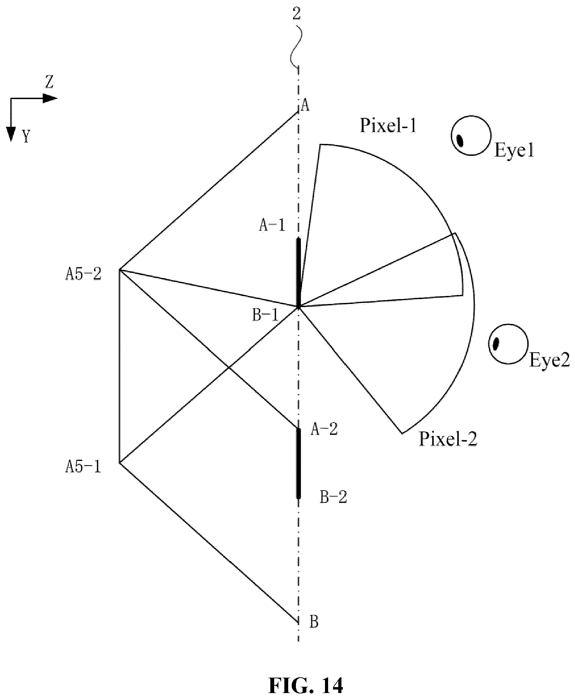

An example is used where a straight line extending in the first direction Y is displayed. FIGS. 12 to 14 are schematic diagrams illustrating a display method for a light field display system to display a straight line in the projection region of two adjacent display sub-units according to an embodiment of the present application. Reference is made to FIGS. 12 and 14. Assuming that the straight line AB is to be displayed, the length of the straight line AB in the first direction Y is greater than the length of a rectangle Z1, so the corresponding display sub-units are required to project display sub-pixels to the line segment AA-2 and the line segment BB-1 at the point A5-2 and the point A5-1, respectively. Since the projection regions of the display sub-units at A5-1 and A5-2 overlap, the overlapping region is the line segment B-1A-2. That is, on the line segment AB, part of the display sub-pixels may be obtained by projecting one sub-pixel, and part of the display sub-pixels may be obtained by projecting two sub-pixels. It can be understood that only two equivalent short trajectory straight lines (such as the two bold lines in FIG. 12) are shown in FIGS. 12 to 14. In fact, the projection regions corresponding to other equivalent short trajectory straight lines also overlap the line segment AB. Therefore, the line segments A-1 to B-1 and A-2 to B-2 in the actual AB line segment may be obtained by projecting one sub-pixel, and the remaining line segments may be obtained by projecting two sub-pixels. When a sub-pixel is projected onto a lenticular grating surface where AB is located through the projection lens, the beam divergence angle of the sub-pixel is determined by the projection lens during imaging. When the sub-pixel passes through the lenticular grating, the divergence angle of the sub-pixel in the first direction Y changes, and the divergence angle of the sub-pixel in the second direction X does not change. Display sub-pixels at points A-1 and B-1 in FIG. 13 are used as an example. When the unidirectional expanding angle of the lenticular grating is 75 degrees, since each position in the region between points A-1 and B-1 corresponds to only one single sub-pixel, the sub-pixels in this region are expanded in the vertical direction by the lenticular grating. Since the sub-pixels at points A-1 and B-1 come from A5-2 and A5-1, respectively, the expansion angles of the light beams of the sub-pixels are different after the light beams pass through the lenticular grating. θ shown in the figure is the common coverage region of light spots of the sub-pixels corresponding to the A-1B-1 region, only when the observer's eyes are in this region can all the display sub-pixels in A-1B-1 be seen. Any point in the region similar to A-2 to B-1 in the figure is covered by two display sub-pixels. Since the two display sub-pixels come from different projection components, the display sub-pixels face different directions after being expanded unidirectionally by the lenticular grating. Therefore, as shown in FIG. 14, different display sub-pixels need to be selected when the eyes are in different directions relative to the display region so that a complete display or a brighter display can be achieved. As shown in FIG. 14, when Eye1 is above the display region, it is necessary to select the projection component to display Pixel-1 at A5-1 so that Eye1 can see the pixel; when Eye2 is in the region directly opposite to or below the projection, it is necessary to select the projection component to display Pixel-2 at A5-2 so that Eye2 can see a brighter display sub-pixel.

From the preceding analysis, it can be seen that by setting the projection components on the equivalent short trajectory straight lines, different sub-pixels (including sub-pixels on the same projection component or different projection components) form different display sub-pixels or different viewing angles of the same display sub-pixel, thereby achieving the display of a complete image. In addition, in the second direction X, the viewing angle is determined by the FOVH of the projection lens. In the preceding embodiment, when the FOVH of the projection lens is only 84 degrees, the viewing angle of the light field display system in the second direction X is also only 84 degrees, and the human eyes can only see a relatively small display region in the second direction X.

The present application proposes a solution for expanding the viewing angle in the second direction X.

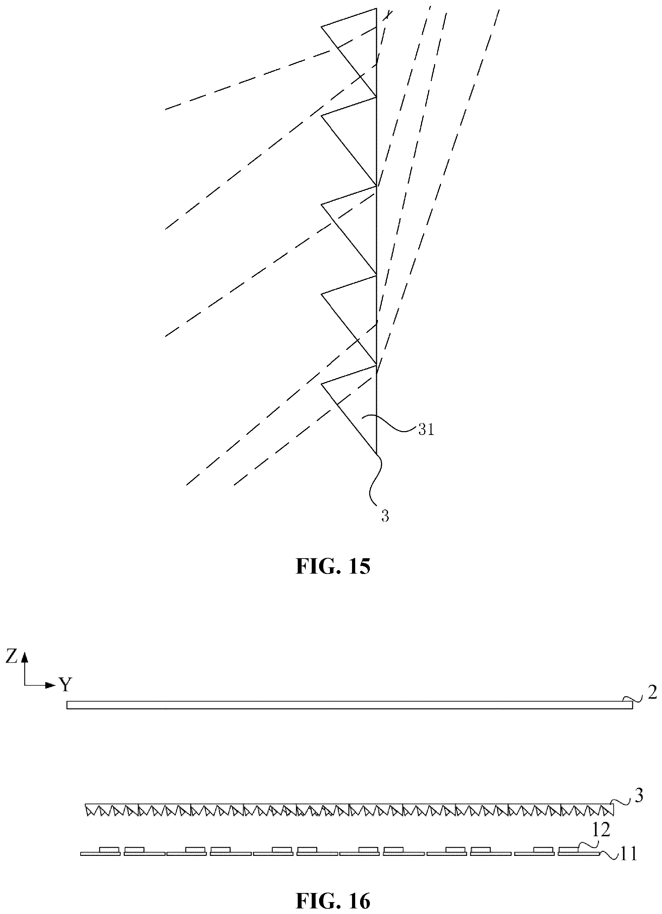

FIG. 15 is a schematic diagram illustrating the structure of a deflection component according to an embodiment of the present application. FIG. 16 is a schematic diagram illustrating the structure of another light field display system according to an embodiment of the present application. With reference to FIG. 10, FIG. 15, and FIG. 16, a deflection component 3 is also arranged between the unidirectional scattering film 2 and the multiple display sub-units, and the deflection component 3 is configured to deflect the emitted light of the projection components in the multiple display sub-units in the second direction X or in the direction opposite to the second direction X, when the projection components move on a short trajectory between the fourth trajectory point A4 and the first trajectory point A1 and when the projection components move on a short trajectory between the second trajectory point A2 and the third trajectory point A3.

Illustratively, when a projection component rotates on the short trajectory between the first trajectory point A1 and the second trajectory point A2 and the short trajectory between the third trajectory point A3 and the fourth trajectory point A4, the projection component is closer to the fifth trajectory point A5 or the sixth trajectory point A6, and the projection component can be equivalent to moving on the equivalent short trajectory straight line, with the corresponding display region of the rectangle Z1. When the projection component rotates on the short trajectory between the first trajectory point A1 and the fourth trajectory point A4 and the short trajectory between the second trajectory point A2 and the third trajectory point A3, the projection component is far away from the fifth trajectory point A5 and the sixth trajectory point A6, and the projection surface deviates far from rectangle Z1. In this embodiment, the emitted light of the projection component when moving on the short trajectory between the first trajectory point A1 and the fourth trajectory point A4 and the short trajectory between the second trajectory point A2 and the third trajectory point A3 can be deflected in the second direction X or the direction opposite to the second direction X, and the deflected emitted light has a larger included angle with the third direction Z in the second direction X. Then, if the deflected light corresponding to the projection components on some display sub-units 1 also passes through the first display sub-pixel, a display light beam with a large viewing angle can be provided for the first display sub-pixel, that is, a viewing angle greater than 84 degrees can be provided. When the projection component rotates on the short trajectory between the first trajectory point A1 and the fourth trajectory point A4 and the short trajectory between the second trajectory point A2 and the third trajectory point A3, controlling the preset sub-pixels thereon to emit light can provide a viewing angle greater than 84 degrees for the corresponding display sub-pixels in the rectangular Z1 region.

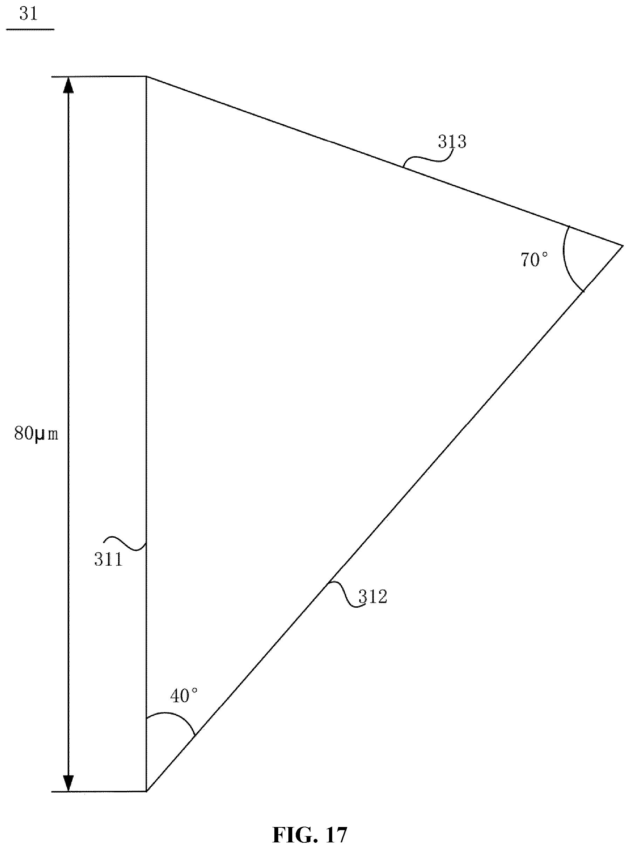

Optionally, FIG. 17 is a schematic diagram illustrating the structure of a deflection unit according to an embodiment of the present application. With reference to FIG. 15 to 17, the deflection component 3 includes a first deflection film and a second deflection film, and the first deflection film and the second deflection film are both formed by the arrangement of multiple deflection units 31; a deflection unit 31 is a triangular prism structure consisting of a bottom surface 311, an effective side surface 312, and an ineffective side surface 313, the deflection unit 31 is configured to deflect light incident on the effective side surface and emitted from the bottom surface in a direction away from the normal corresponding to the bottom surface, and the effective side surface and the ineffective side surface corresponding to the deflection unit are deflected in the direction of the emitted light of the corresponding projection component. The refractive index of the deflection unit 31 may be set to 1.62, when the angle between the ineffective side surface 313 and the effective side surface 312 is 70 degrees, the angle between the effective side surface 312 and the bottom surface 311 is 40 degrees, the angle between the ineffective side surface 313 and the bottom surface 311 is 70 degrees, and the length of the bottom surface is 80 um (considering that the size of the pixel spot projected onto the deflection film is 1 mm per pixel, and that more than 10 structures are provided under one pixel (that is, the projection spot of one pixel covers at least 10 tooth-shaped deflection structures as shown in FIG. 15), the deflected light beams are relatively uniform to reduce the influence of a single tooth-shaped deflection on the uniformity of the light beams), the light incident on the effective side surface 312 can be deflected to a larger angle.

Optionally, a light absorbing material is coated on the ineffective side surface 313 of the deflection unit 31 so that light incident on the ineffective side surface 313 does not enter the interior of the deflection unit 31.

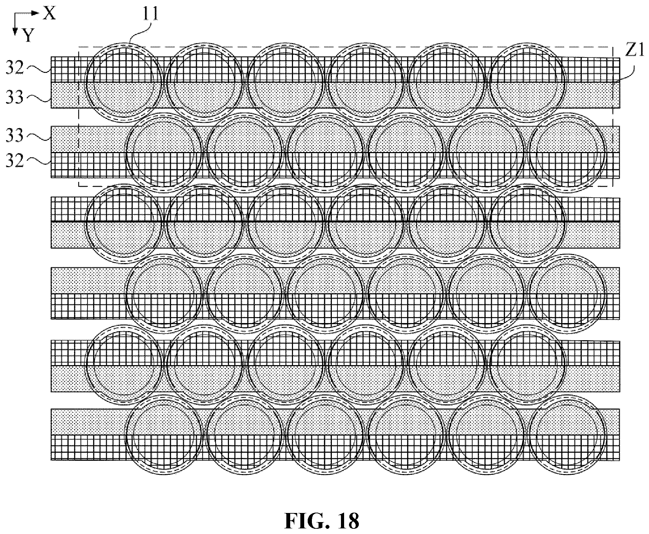

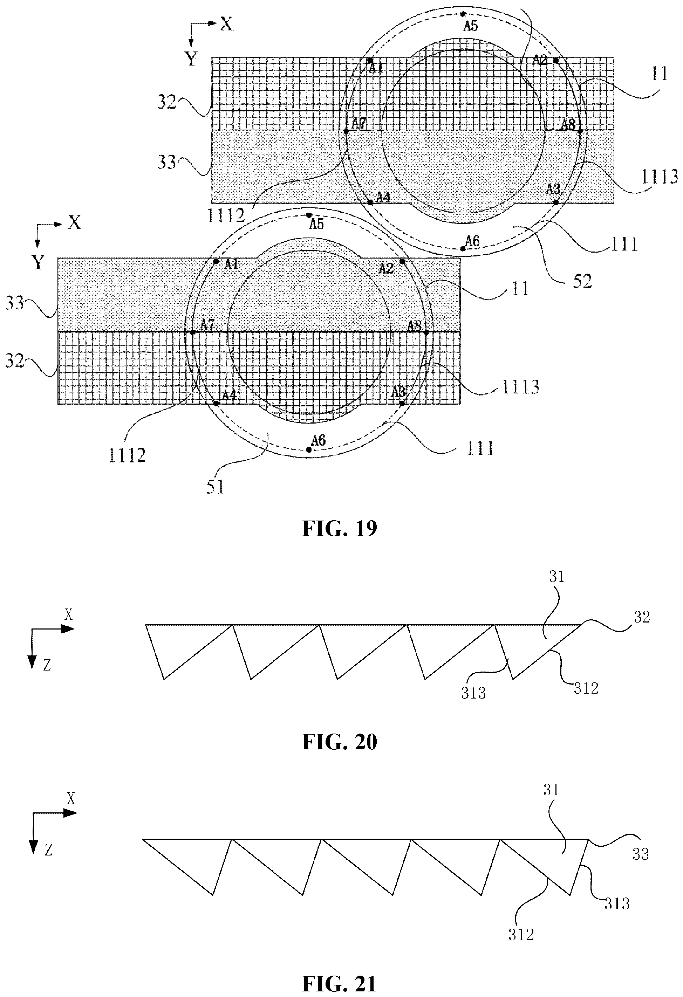

Optionally, FIG. 18 is a schematic diagram of a positional relationship between a deflection component and display sub-units according to an embodiment of the present application. FIG. 19 is a schematic diagram of a positional relationship between two adjacent display sub-units disposed in two adjacent rows and a deflection component in FIG. 18. FIG. 20 is a schematic diagram illustrating the structure of a first deflection film according to an embodiment of the present application. FIG. 21 is a schematic diagram illustrating the structure of a second deflection film according to an embodiment of the present application. Reference is made to FIG. 18 to FIG. 21. The deflection component 3 includes multiple first deflection films 32 and multiple second deflection films 33. One row of display sub-units arranged in the second direction X corresponds to one first deflection film 32 and one second deflection film 33. The rotation trajectory 111 also includes a seventh trajectory point A7 and an eighth trajectory point A8. A line connecting the seventh trajectory point A7 and the eighth trajectory point A8 is a second diameter of the rotation trajectory 111. The seventh trajectory point A7 is disposed on the short trajectory 1112 between the first trajectory point A1 and the fourth trajectory point A4. The eighth trajectory point A8 is disposed on the short trajectory 1113 between the second trajectory point A2 and the third trajectory point A3. The second diameter is parallel to the second direction X.

Two adjacent rows of display sub-units and the corresponding deflection films form a repeating unit. The deflection films in the repeating unit are configured to deflect emitted light in one direction of the second direction or the direction opposite to the second direction, where the emitted light includes emitted light of the first projection components of the first row of display sub-units (the first row of display sub-units from top to bottom in the Z1 region in FIG. 18) when the first projection components move on a short trajectory between the seventh trajectory point A7 and the first trajectory point A1, emitted light of the first projection components of the first row of display sub-units when the first projection components move on a short trajectory between the eighth trajectory point A8 and the second trajectory point A2, emitted light of the first projection components of the second row of display sub-units (the second row of display sub-units from top to bottom in the Z1 region in FIG. 18) when the first projection components move on a short trajectory between the third trajectory point A3 and the eighth trajectory point A8, and emitted light of the first projection components of the second row of display sub-units when the first projection components move on a short trajectory between the fourth trajectory point A4 and the seventh trajectory point A7. The deflection films in the repeating unit are further configured to deflect emitted light in the other direction of the second direction or the direction opposite to the second direction, where the emitted light includes emitted light of the first projection components of the second row of display sub-units when the first projection components move on the short trajectory between the seventh trajectory point A7 and the first trajectory point A1, emitted light of the first projection components of the second row of display sub-units when the first projection components move on the short trajectory between the eighth trajectory point A8 and the second trajectory point A2, emitted light of the first projection components of the first row of display sub-units when the first projection components move on the short trajectory between the third trajectory point A3 and the eighth trajectory point A8, and emitted light of the first projection components of the first row of display sub-units when the first projection components move on the short trajectory between the fourth trajectory point A4 and the seventh trajectory point A7.

Illustratively, the first deflection film and the second deflection film corresponding to the first row of display sub-units in the two adjacent rows of display sub-units are configured to deflect emitted light of the first projection components in the first row of display sub-units in one direction of the second direction or the direction opposite to the second direction, when the first projection components move on the short trajectory between the seventh trajectory point and the first trajectory point and when the first projection components move on the short trajectory between the eighth trajectory point and the second trajectory point, and are configured to deflect emitted light of the first projection components in the first row of display sub-units in the other direction of the second direction or the direction opposite to the second direction, when the first projection components move on the short trajectory between the third trajectory point and the eighth trajectory point and when the first projection components move on the short trajectory between the fourth trajectory point and the seventh trajectory point.

The first deflection film and the second deflection film corresponding to the second row of display sub-units in the two adjacent rows of display sub-units are configured to deflect emitted light of the first projection components in the second row of display sub-units in one direction of the second direction or the direction opposite to the second direction, when the first projection components move on the short trajectory between the third trajectory point and the eighth trajectory point and when the first projection components move on the short trajectory between the fourth trajectory point and the seventh trajectory point, and are configured to deflect emitted light of the first projection components in the second row of display sub-units in the other direction of the second direction or the direction opposite to the second direction, when the first projection components move on the short trajectory between the seventh trajectory point and the first trajectory point and when the first projection components move on the short trajectory between the eighth trajectory point and the second trajectory point.

Illustratively, the first deflection film 32 and the second deflection film 33 have the same structure and are only different in the position of the side in the light field display system. In the light field display system, the bottom surface of the deflection film is located on a side away from the light emission surface of the display sub-units, and the bottom surface of the deflection film is parallel to the plane where the optical center of the projection component moves. The cross-sections of the deflection films in the first direction Y are shown in FIGS. 20 and 21. The effective side surface 312 and the ineffective side surface 313 of one deflection film are arranged in the second direction X (arranged from left to right in the figure), then light incident on the effective side surface 312 of the deflection film is deflected in the direction opposite to the second direction X (deflected to the left in the figure). The effective side surface 312 and the ineffective side surface 313 of the other deflection film are arranged in the direction opposite to the second direction X (arranged from right to left in the figure), then light incident on the effective side surface 312 of this deflection film is deflected in the second direction X (deflected to the right in the figure). In FIG. 19, two display sub-units are provided, namely, a first display sub-unit 51 and a second display sub-unit 52, and the first display sub-unit 51 and the second display sub-unit 52 are located in different rows and adjacent to each other. From the preceding analysis, it can be learned that when the first projection component in the first display sub-unit 51 moves on the short trajectory between the first trajectory point A1 and the second trajectory point A2 and the first projection component in the second display sub-unit 52 moves on the short trajectory between the third trajectory point A3 and the fourth trajectory point A4, the corresponding display region is the rectangle Z1 shown in FIG. 9. In this case, the viewing angle in the second direction X is 84 degrees (which can be understood as -42 degrees to 42 degrees). The deflection films are set to not deflect the emitted light when the first projection component moves on this part of the short trajectory, that is, this part is responsible for providing the viewing angle of -42 degrees to 42 degrees for the human eyes in the second direction X. When the first projection component in the first display sub-unit 51 moves on the short trajectory between the first trajectory point A1 and the seventh trajectory point A7 and moves on the short trajectory between the second trajectory point A2 and the eighth trajectory point A8, the light emitted by the first projection component is deflected in the second direction X through the second deflection film 33, thereby providing the preceding rectangle Z1 with a viewing angle greater than 84 degrees (that is, beyond 42 degrees) in the second direction X. When the first projection component in the second display sub-unit 52 moves on the short trajectory between the fourth trajectory point A4 and the seventh trajectory point A7 and moves on the short trajectory between the third trajectory point A3 and the eighth trajectory point A8, the light emitted by the first projection component is deflected in the second direction X through the second deflection film 33, thereby providing the preceding rectangle Z1 with a viewing angle greater than 84 degrees (that is, beyond 42 degrees) in the second direction X. When the first projection component in the second display sub-unit 52 moves on the short trajectory between the first trajectory point A1 and the seventh trajectory point A7 and moves on the short trajectory between the second trajectory point A2 and the eighth trajectory point A8, the light emitted by the first projection component is deflected in the direction opposite to the second direction X through the second deflection film 33, thereby providing the preceding rectangle Z1 with a viewing angle greater than 84 degrees (that is, beyond -42 degrees) in the second direction X. When the first projection component in the first display sub-unit 51 moves on the short trajectory between the fourth trajectory point A4 and the seventh trajectory point A7 and moves on the short trajectory between the third trajectory point A3 and the eighth trajectory point A8, the light emitted by the first projection component is deflected in the direction opposite to the second direction X through the second deflection film 33, thereby providing the preceding rectangle Z1 with a viewing angle greater than 84 degrees (that is, beyond -42 degrees) in the direction opposite to the second direction X. It can be seen that with the first deflection film 32 and the second deflection film 33, the corresponding display sub-pixels can be viewed within a wider viewing angle range. This expands the viewing angle, enlarges the display region, increases the number of viewpoints, and enhances the continuity of the viewpoints. In addition, the arrangement of the first deflection film and the second deflection film in this embodiment can ensure that the display projection line and the rotation trajectory of the display sub-unit have an intersection, and black gaps (missing display pixels) do not occur.

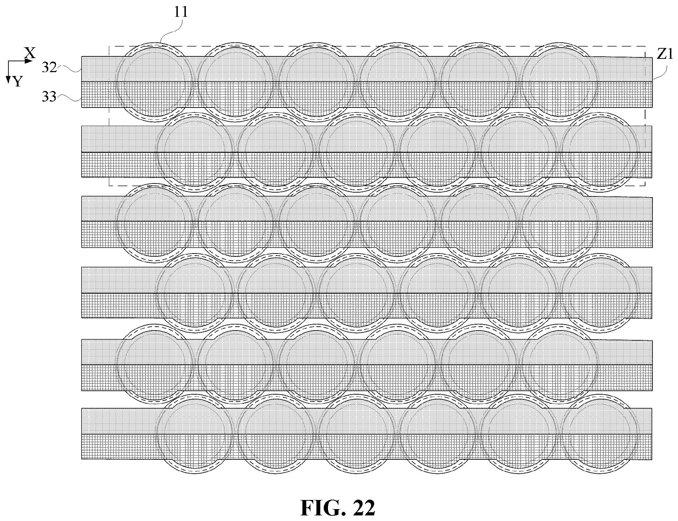

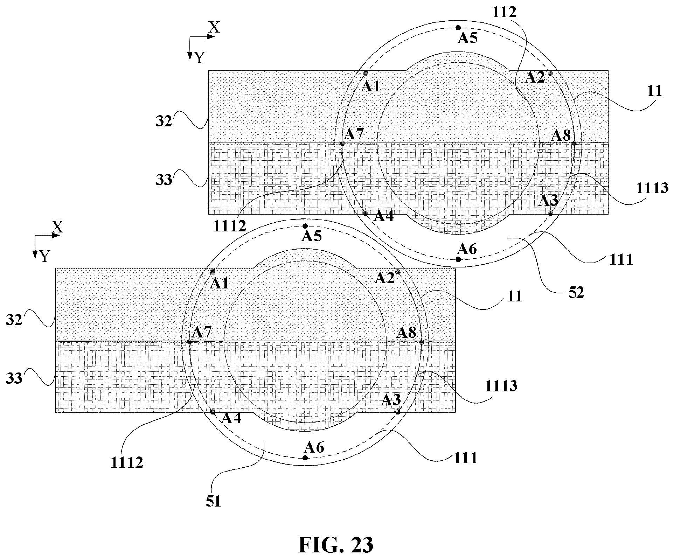

In some other embodiments, as shown in FIGS. 22 and 23, FIG. 22 is a schematic diagram of another positional relationship between a deflection component and display sub-units according to an embodiment of the present application, and FIG. 23 is a schematic diagram of a positional relationship between two adjacent display sub-units disposed in two adjacent rows and the deflection component in FIG. 22. The first deflection film 32 is configured to deflect emitted light of the first projection components in one of the second direction X or the direction opposite to the second direction X, when the first projection components move on the short trajectory between the seventh trajectory point A7 and the first trajectory point A1 and the short trajectory between the eighth trajectory point A8 and the second trajectory point A2. The second deflection film 33 is configured to deflect the emitted light of the first projection components in the other direction of the second direction or the direction opposite to the second direction, when the first projection components move on the short trajectory between the third trajectory point A3 and the eighth trajectory point A8 and the short trajectory between the fourth trajectory point A4 and the seventh trajectory point A7.

Illustratively, the first deflection film 32 and the second deflection film 33 have the same structure and are different only in the position of the functional surface in the light field display system. In the light field display system, the bottom surface of the deflection film is located on the side away from the light emission surface of the display sub-units, and the bottom surface of the deflection film is parallel to the plane where the optical center of the projection component moves. The cross-sections of the deflection films in the first direction Y are shown in FIGS. 20 and 21. The effective side surface 312 and the ineffective side surface 313 of one deflection film are arranged in the second direction X (arranged from left to right in the figure), then light incident on the effective side surface 312 of the deflection film is deflected in the direction opposite to the second direction X (deflected to the left in the figure). The effective side surface 312 and the ineffective side surface 313 of the other deflection film are arranged in the direction opposite to the second direction X (arranged from right to left in the figure), then light incident on the effective side surface 312 of this deflection film is deflected in the second direction X (deflected to the right in the figure). The positions of the first deflection film 32 and the second deflection film 33 in FIG. 22 may be interchanged, and this embodiment is only schematically described with reference to the positions shown in FIG. 22. In FIG. 23, two display sub-units are provided, namely, the first display sub-unit 51 and the second display sub-unit 52, and the first display sub-unit 51 and the second display sub-unit 52 are located in different rows and adjacent to each other. From the preceding analysis, it can be learned that when the first projection component in the first display sub-unit 51 moves on the short trajectory between the first trajectory point A1 and the second trajectory point A2 and the first projection component in the second display sub-unit 52 moves on the short trajectory between the third trajectory point A3 and the fourth trajectory point A4, the corresponding display region is the rectangle Z1 shown in FIG. 9. In this case, the viewing angle in the second direction X is 84 degrees (which can be understood as -42 degrees to 42 degrees). The deflection films are set to not deflect the emitted light when the first projection component moves on this part of the short trajectory, that is, this part is responsible for providing a viewing angle of -42 degrees to 42 degrees for the human eyes in the second direction X. When the first projection component in the first display sub-unit 51 moves on the short trajectory between the first trajectory point A1 and the seventh trajectory point A7 and the short trajectory between the second trajectory point A2 and the eighth trajectory point A8, the light emitted by the first projection component is deflected in the direction opposite to the second direction X through the first deflection film 32, thereby providing the preceding rectangle Z1 with a viewing angle greater than 84 degrees (that is, beyond -42 degrees) in the direction opposite to the second direction X. When the first projection component in the second display sub-unit 52 moves on the short trajectory between the fourth trajectory point A4 and the seventh trajectory point A7 and the short trajectory between the third trajectory point A3 and the eighth trajectory point A8, the light emitted by the first projection component is deflected in the second direction X through the second deflection film 33, thereby providing the preceding rectangle Z1 with a viewing angle greater than 84 degrees (that is, beyond 42 degrees) in the second direction X. It can be seen that with the first deflection film 32 and the second deflection film 33, the corresponding display sub-pixels can be viewed within a wider viewing angle range. This expands the viewing angle, enlarges the display region, increases the number of viewpoints, and enhances the continuity of the viewpoints.

In this embodiment, the projection of the first deflection film on the corresponding display sub-units in the thickness direction of the light field display system, that is, the third direction Z, is set to cover overlapping projection regions of all short trajectories of the corresponding row of display sub-units in the second direction X, where these short trajectories include short trajectories between the first trajectory point A1 and the seventh trajectory point A7 and short trajectories between the second trajectory point A2 and the eighth trajectory point A8. Similarly, the projection of the second deflection film on the corresponding display sub-units in the thickness direction of the light field display system, that is, the third direction Z, is set to cover overlapping projection regions of all short trajectories of the corresponding row of display sub-units in the second direction X, where these short trajectories include short trajectories between the fourth trajectory point A4 and the seventh trajectory point A7 and short trajectories between the third trajectory point A3 and the eighth trajectory point A8.

Optionally, with reference to FIG. 19, each display sub-unit also includes at least one second projection component, and the rotation trajectory of a second projection component is 112. A difference between the distance from any first projection component disposed in the same display sub-unit to the center of the display sub-unit and the distance from any second projection component to the center of the display sub-unit is less than or equal to a first preset value. The deflection component is also configured to deflect, in the second direction or the direction opposite to the second direction, emitted light of the second projection components in the multiple display sub-units when the second projection components move on the rotation trajectory of the second projection components. The at least one second projection component is configured to project emitted light of a sub-pixel of the least one second projection component onto the imaging surface to form a second display sub-pixel, and the second display sub-pixel displays the same content as the corresponding first display sub-pixel, but has a different display viewing angle.

In this embodiment, the function of the second projection component when the second projection component moves on the short trajectory between the first trajectory point A1 and the fourth trajectory point A4 and the short trajectory between the second trajectory point A2 and the third trajectory point A3 is the same as the function of the first projection component when the first projection component moves on the short trajectory between the first trajectory point A1 and the fourth trajectory point A4 and the short trajectory between the second trajectory point A2 and the third trajectory point A3. Both functions are to increase the completeness of the light emission angle. The plane where the optical center of the second projection component moves and the plane where the optical center of the first projection component moves may be the same plane or different. The projection component may be closely attached to the deflection film, and the projection distance of the first projection component may also be different from that of the second projection component. When the human eye views a display plane at a large angle, the display sub-pixels are farther away from the human eye, so it is acceptable for the display sub-pixels at a large angle to be slightly larger, and the viewing effect for the human eye is still consistent with the viewing effect at a small angle. To reduce costs, the resolution of the display devices in the second projection component may be allowed to differ from that of the display devices in the first projection component, and the focal plane of projection of the second projection component may also differ from that of the first projection component. The rotation trajectory 112 of the second projection component is completely under the projection of the deflection component, and the projection surface of the second projection component is completely deflected by the deflection component. The rotation trajectory 112 of the second projection component is tangent to the boundary of the effective display region (that is, rectangle Z1) of the current display sub-unit, which can fill in gaps between display sub-units that are tangent in the horizontal direction. Since the curvature of a wide-angle display projection line is relatively large, generally much larger than the curvature radius of the rotation trajectory 112 of the second projection component, it is ensured that at least one intersection exists between the display projection line within the effective display region of the display sub-unit and the rotation trajectories of the projection components (including the first and second projection components), thereby ensuring the completeness of the wide-angle light emission angle of the display sub-pixels.

Optionally, the deflection component is adjacent to a side of the projection lens in the projection component, and when the projection component moves into the projection of the deflection component in the third direction Z, the imaging light beam can completely pass through the deflection component before imaging.

Optionally, the deflection component is installed as close to the projection lens as possible without interfering with the movement of the projection component.

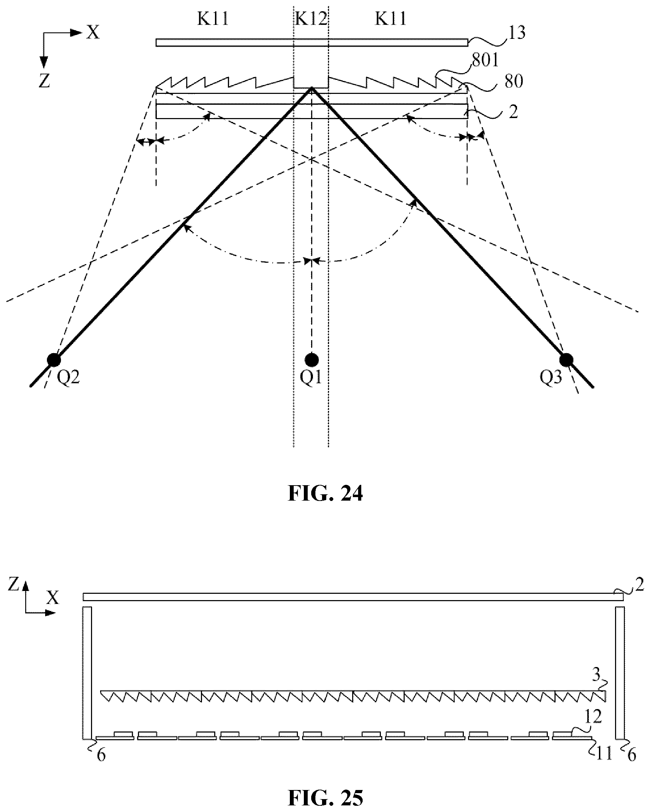

In some other embodiments, as shown in FIG. 24, FIG. 24 is a schematic diagram illustrating the structure of another light field display system according to an embodiment of the present application. In the figure, the light field display system also includes a linear Fresnel film 80 disposed between the multiple display sub-units and the unidirectional scattering film 2; in the second direction X, the linear Fresnel film 80 is provided with two edge regions K11 and a central region K12 disposed between the two edge regions K11, the size of each edge region K11 is greater than the size of the central region K12, and the second direction X is perpendicular to the first direction Y. In each edge region K11, a side of the linear Fresnel film 80 adjacent to the multiple display sub-units includes multiple serrated structures 801 extending in the first direction Y; and in each edge region K11, the slopes of the multiple serrated structures 801 are equal or gradually increase in a respective direction of the central region K12 towards each edge region K11.

In this embodiment, it is not necessary to set a deflection film, but a linear Fresnel film 80 is set to expand the viewing angle in the second direction X. The linear Fresnel film 80 is disposed between the honeycomb structure 13 composed of multiple display sub-units and the unidirectional scattering film 2. Multiple serrated structures 801 are arranged in the second direction X and extend in the first direction Y (not shown in FIG. 24). In the second direction X, the size of the central region K12 may be set to be less than 1% of the size of the linear Fresnel film 80. The principle of expanding the viewing angle in this embodiment is as follows: The light emitted by the display sub-units passes through the linear Fresnel film 80 and the unidirectional scattering film 2 in sequence. In the edge region K11, when the emitted light is irradiated onto the serrated structures 801 on the linear Fresnel film 80, refraction occurs, causing the viewing angle corresponding to the display sub-units to change, and the viewing angles are deflected toward the central region K12. For example, the two viewing angles indicated by the edge in FIG. 24 are both deflected toward the center. Compared to a situation where both viewing angles are not deflected, the common region (that is, the overlapping region of the three viewing angles) formed with the viewing angle corresponding to the central region (the thick solid line in the figure) becomes larger, thereby allowing all the display sub-units to be seen within a larger viewing angle range, that is, the viewing angle is expanded. In addition, the slopes of the serrated structures 801 may be set to be the same, which can reduce the design difficulty. Alternatively, the slopes of the multiple serrated structures 801 may be different. For example, the slope of the serrated structure farther away from the central region is larger, and the angle by which the viewing angle is deflected toward the central region is correspondingly larger. As a result, each serrated structure deflects the viewing angle into a larger common region, thus increasing the overlapping region of the viewing angles corresponding to all the display sub-units. For example, when the linear Fresnel film is not set, all display sub-units may be seen at viewpoint Q1, but the rightmost display sub-unit cannot be seen at viewpoint Q2, and the leftmost display sub-unit cannot be seen at viewpoint Q3. After the linear Fresnel film is set, all the display sub-units can be seen at viewpoints Q1, Q2, and Q3.

In the preceding embodiment, optionally, the portion of the linear Fresnel film 80 located in the central region K12 may not be provided with a serrated structure so that the viewing angle corresponding to the central region is not deflected; alternatively, a serrated structure with a very small slope (for example, forming an angle less than 1° with the second direction X) may be provided. In the preceding embodiment, each display sub-unit may include only the first projection component and not the second projection component, and the function of expanding the viewing angle is achieved by the linear Fresnel diaphragm film 80. Compared to using the second projection component for expanding the viewing angle, this configuration can reduce costs. Moreover, the deflection film may not be used, thus further reducing costs. The serrated structure may be either flat or curved. This embodiment does not impose specific limitations on the serrated structure.

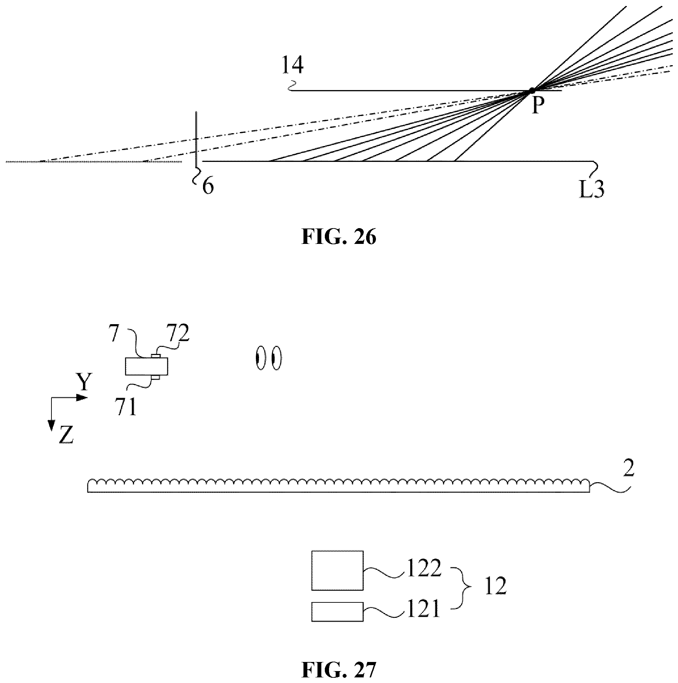

Optionally, FIG. 25 is a schematic diagram illustrating the structure of another light field display system according to an embodiment of the present application. FIG. 26 is a diagram illustrating the principle of expanding a viewing angle using a reflector according to an embodiment of the present application. In combination with FIG. 2, FIG. 25, and FIG. 26, the light field display system also includes a reflector 6; and the reflector 6 is disposed on at least one side of the multiple display sub-units in the second direction X.

For a display sub-unit located at the edge of the display sub-unit array, when the projection component on the display sub-unit moves to the edge of the array, the light emitted from the projection component may have a portion facing outside the imaging surface 14. By the configuration of a reflector 6, this portion of light is reflected to the first display sub-pixel P on the imaging surface, thereby providing a larger viewing angle for the first display sub-pixel P and ensuring the completeness of the viewing angle of the edge pixels in the array. In FIG. 26, L3 is an equivalent short trajectory straight line, and the dotted line on the left side of the equivalent short trajectory straight line L3 is a virtual image formed by the equivalent short trajectory straight line L3. According to the display area of 900 mm*1350 mm and the display sub-pixel of 0.65 mm, the display resolution of the light field display system is 1384*2076. Optionally, reflectors may be set on each of two sides of the display sub-unit in the second direction X.

Optionally, FIG. 27 is a schematic diagram illustrating the structure of another light field display system according to an embodiment of the present application. With reference to FIG. 27, the light field display system also includes a human eye position tracking component 7 electrically connected to the control component, and the control component is configured to control the display of a corresponding sub-pixel according to the eye position information fed back by the eye position tracking component.

The light field display system may be calibrated before display. During the calibration, all viewpoints on a horizontal straight line in space (that is, a straight line extending in the second direction X) are calibrated, and the displayed sub-pixel is determined for each viewpoint. When the lenticular grating expands and the light spot is vertical, the viewed image remains complete as the viewer moves forward, backward, left, and right relative to the viewpoint on the straight line. However, when the light spot bends as the grating expands, the viewed image changes as the viewer moves relative to the viewpoints on the calibration line. For display sub-pixels with smaller viewing angles, the shapes of light spots are relatively consistent when the lenticular grating expands, and images seen by the viewer may be distorted. For display sub-pixels with larger viewing angles, the light beams first pass through the deflection component and then are expanded by the lenticular grating, the shapes of the light beams are significantly altered compared with being directly expanded by the lenticular grating. When the projection component may be changed, the shapes of the light beams may suddenly shift, and a black gap may appear in the viewed image when the viewer moves away from the calibration viewpoints. Therefore, when the light field display screen is viewed at a small viewing angle, the eye position tracking component 7 may be not provided. When the light field display system is viewed at a large field of view, the eye position tracking component 7 is required to feedback the eye position to the control component to adjust the displayed sub-pixels according to the eye position in real time, achieving a complete light field display with a large viewing angle and no distortion.

Optionally, the eye position tracking component includes an infrared fill light and a camera; the infrared fill light is configured to prevent the camera from being unable to recognize the eyes when the ambient light is dim, thereby preventing a case where the eyes are not recognized or the eye position is inaccurately identified. In this embodiment, after the eye position tracking component determines the eye position, a software calibration method may be used to determine which sub-pixel emits light at which angle to illuminate the pixel display at which position on the imaging surface.

As shown in FIG. 27, the eye position tracking component includes cameras installed near the lenticular grating; and the cameras face two directions, namely, a first camera 71 and a second camera 72. The second camera 72 is configured to detect the eye position when the eyes are at a certain distance from the screen. The second camera 72, which is located at a certain distance from the screen, is closer to the eyes, offering high resolution for the eyes and thus more accurate eye position detection. When the eyes are closer to the screen, the second camera 72 cannot detect the eyes, and the first camera 71 determines the eye position by detecting the image of the eyes reflected on the infrared reflective film on the lenticular grating. Another function of the first camera 71 is to detect and correct the display sub-pixels of the imaging surface. It can be understood that the field of view of the first camera 71 faces toward the imaging surface, while the field of view of the second camera 72 is in the opposite direction of the field of view of the first camera 71.

In addition, the light field display system also needs to be calibrated regularly during use to prevent parameter changes. The calibration may identify a set of parameters required to display the full resolution (full screen) image for a specific known viewing position. According to the parameters, multiple display sub-units may be driven to determine the display sub-unit corresponding to each image point in the full screen display, and the display direction angle and the display moment corresponding to the display sub-unit.

Optionally, the light field display system also includes a camera module, a field of view of the camera module is directed towards the multiple display sub-units, the eye position tracking component and the calibration module are both connected to the camera module, and the camera module is configured to provide image information for the calibration module and the eye position tracking component. In this embodiment, the camera module includes a first camera 71 and a second camera 72.

Illustratively, the camera module may be a camera. When the camera module faces the multiple display sub-units, the eye position tracking component and the calibration module may share a camera, and the image information acquired by the camera may be used by the eye position tracking component to track the eye position or used by the calibration module to perform parameter calibration. By sharing the camera, the number of required cameras can be reduced, thereby reducing the cost of the light field display system.

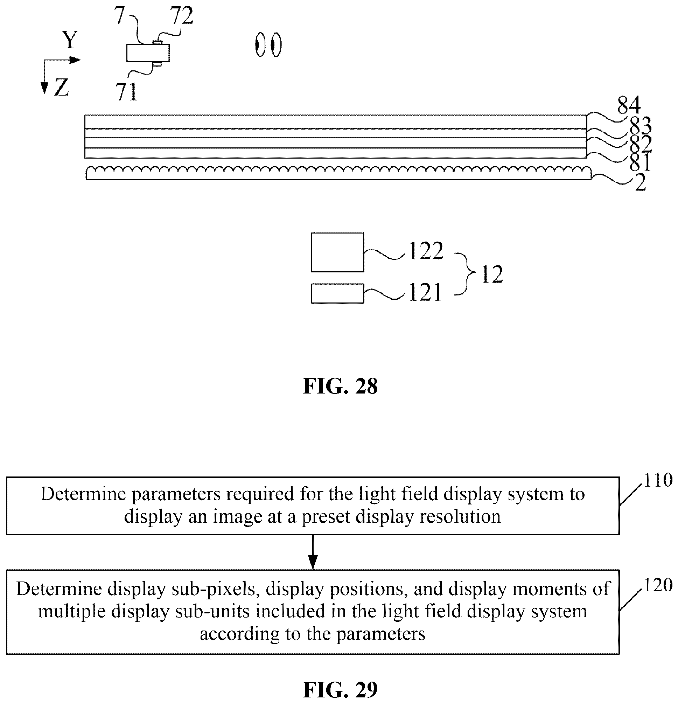

Optionally, FIG. 28 is a schematic diagram illustrating the structure of another light field display system according to an embodiment of the present application. With reference to FIG. 28, the light emission surface of the unidirectional scattering film 2 is sequentially provided with a quarter-wave plate 81, a polarizer 82, an anti-reflective film 83, and an infrared reflective film 84.

The quarter-wave plate 81, polarizer 82, and anti-reflective film 83 are used to reduce the influence of ambient light and improve the display contrast. The infrared reflective film 84 reflects infrared light, has high transmittance for visible light and can perform mirror imaging for objects that scatter infrared light. When the infrared fill light located in front of the screen illuminates the human eyes, the camera can see the image of the human eyes through the infrared reflective film and then detect the positions of the human pupils.

In addition, when the display light poles are spliced into a curved screen, each film may be a flexible film to match the curved screen.

The embodiment of the present application also provides a display method for a light field display system, as shown in FIG. 29. FIG. 29 is a flowchart of a display method for a light field display system according to an embodiment of the present application. The display method includes the steps described below.

In S110, parameters required for the light field display system to display an image at a preset display resolution are determined.

In S120, display sub-pixels, display positions, and display moments of multiple display sub-units included in the light field display system are determined according to the parameters.

Illustratively, after a set of parameters required for the display at a specific viewing position is determined by a calibration module or external data transmission (which can be sent to the control component in the form of a parameter table), the control component may determine multiple parameters required for the display of each display sub-unit according to the parameters, such as a display moment and display grayscale and then control the rotation speed of each display sub-unit. The specific display method for the light field display system may refer to the description of the light field display system in the present application and is not repeated herein. The display method for the light field display system of the present application has more continuous viewpoints.

Optionally, the display method for the light field display system also includes determining the display sub-pixels, the display positions, and the display moments of the display sub-units according to the parameters and eye position information fed back by the eye position tracking component. When the eye position tracking component is needed, it is necessary to determine the multiple parameters required for the display of the display sub-units jointly according to the eye position information fed back by the eye position tracking component.

## Claims

1. A light field display system, comprising:
a plurality of display sub-units, wherein the plurality of display sub-units are arranged in a honeycomb shape, each display sub-unit of the plurality of display sub-units comprises a circular rotating structure and at least one first projection component disposed on an edge of the rotating structure, each first projection component of the at least one first projection component comprises a plurality of sub-pixels, and the at least one first projection component is configured to project, in a preset direction, emitted light of a sub-pixel in the at least one first projection component onto an imaging surface to form a first display sub-pixel;
a unidirectional scattering film disposed on a side of a light emission surface of at least one display sub-unit of the plurality of display sub-units, wherein the unidirectional scattering film is configured to expand emitted light of the at least one display sub-unit in a first direction; and
a control component built inside the rotating structure and electrically connected to at least one display sub-unit of the plurality of display sub-units, wherein the control component is configured to control rotation of the rotating structure and control display of at least one sub-pixel of the at least one display sub-unit.

2. The light field display system of claim 1, further comprising a display, wherein the display comprises a plurality of display light poles arranged in a second direction, each display light pole of the plurality of display light poles comprises display sub-units of the plurality of display sub-units arranged in the first direction, and the plurality of display light poles are arranged to form the plurality of display sub-units in the honeycomb shape; and
in a same display light pole among the plurality of display light poles, an angle between a line connecting centers of two adjacent ones of the display sub-units and the first direction is 30 degrees, and the second direction is perpendicular to the first direction.

3. The light field display system of claim 1, wherein the unidirectional scattering film comprises a lenticular grating, the lenticular grating comprises a plurality of cylindrical lenses arranged in the first direction and extending in a second direction, and the second direction is perpendicular to the first direction.

4. The light field display system of claim 1, wherein a rotation trajectory of each first projection component comprises a first trajectory point, a second trajectory point, a third trajectory point, and a fourth trajectory point; an angle between a first diameter of the rotation trajectory and a line connecting each trajectory point and a center of the rotation trajectory is a preset angle, and the first diameter is parallel to the first direction; the first trajectory point and the fourth trajectory point are disposed on a first side of the first diameter, the second trajectory point and the third trajectory point are disposed on a second side of the first diameter, the first trajectory point is adjacent to the second trajectory point, and the fourth trajectory point is adjacent to the third trajectory point; and the preset angle is greater than or equal to 30 degrees; and
a deflection component is also arranged between the unidirectional scattering film and the plurality of display sub-units, and for each first projection component, the deflection component is configured to deflect emitted light of the first projection component in a second direction or a direction opposite to the second direction, when the first projection component moves on a short trajectory between the fourth trajectory point and the first trajectory point and on a short trajectory between the second trajectory point and the third trajectory point, and the second direction is perpendicular to the first direction.

5. The light field display system of claim 4, wherein the deflection component comprises a plurality of first deflection films and a plurality of second deflection films, one row of display sub-units arranged in the second direction corresponds to a first deflection film of the plurality of first deflection films and a second deflection film of the plurality of second deflection films, and arrangement orders of the first deflection film and the second deflection film corresponding to different rows of display sub-units arranged in the second direction are the same; the rotation trajectory further comprises a seventh trajectory point and an eighth trajectory point, a line connecting the seventh trajectory point and the eighth trajectory point is a second diameter of the rotation trajectory, the seventh trajectory point is disposed on the short trajectory between the first trajectory point and the fourth trajectory point, the eighth trajectory point is disposed on the short trajectory between the second trajectory point and the third trajectory point, and the second diameter is parallel to the second direction; and
two adjacent rows of display sub-units, and first deflection films and second deflection films corresponding to the two adjacent rows of display sub-units form a repeating unit;
wherein a first deflection film and a second deflection film corresponding to a first row of display sub-units in the two adjacent rows of display sub-units are configured to deflect emitted light of first projection components in the first row of display sub-units in one of the second direction or a direction opposite to the second direction, when the first projection components move on a short trajectory between the seventh trajectory point and the first trajectory point and on a short trajectory between the eighth trajectory point and the second trajectory point, and configured to deflect the emitted light of the first projection components in the first row of display sub-units in the other direction of the second direction or the direction opposite to the second direction, when the first projection components move on a short trajectory between the third trajectory point and the eighth trajectory point and on a short trajectory between the fourth trajectory point and the seventh trajectory point; and
a first deflection film and a second deflection film corresponding to a second row of display sub-units in the two adjacent rows of display sub-units are configured to deflect emitted light of first projection components in the second row of display sub-units in one of the second direction or the direction opposite to the second direction, when the first projection components move on the short trajectory between the third trajectory point and the eighth trajectory point and on the short trajectory between the fourth trajectory point and the seventh trajectory point, and configured to deflect the emitted light of the first projection components in the second row of display sub-units in the other direction of the second direction or the direction opposite to the second direction, when the first projection components move on the short trajectory between the seventh trajectory point and the first trajectory point and on the short trajectory between the eighth trajectory point and the second trajectory point.

6. The light field display system of claim 5, wherein each first deflection film of the plurality of first deflection films comprises a plurality of deflection units, each second deflection film of the plurality of second deflection films comprises a plurality of deflection units, each deflection unit of the plurality of deflection units is a triangular prism comprising an effective side surface, an ineffective side surface, and a bottom surface, the bottom surface is parallel to the light emission surface of the plurality of display sub-units, and each first deflection film and each second deflection film are further configured to deflect light incident on the effective side and emitted from the bottom surface in a direction away from a normal corresponding to the bottom surface; and
the effective side surface and the ineffective side surface corresponding to each first deflection film or each second deflection film are arranged in a deflection direction of emitted light of a first projection component in a corresponding display sub-unit among the plurality of first projection components, and each first deflection film and each second deflection film are composed of the plurality of deflection units formed by arranging the effective side surface and the ineffective side surface in different manners.

7. The light field display system of claim 4, wherein each display sub-unit further comprises at least one second projection component, in a same display sub-unit of the plurality of display sub-units, a difference between a distance from any first projection component of the at least one first projection component to a center of the display sub-unit and a distance from any second projection component of the at least one second projection component to the center of the display sub-unit is less than or equal to a first preset value, and the deflection component is further configured to deflect, in the second direction or the direction opposite to the second direction, emitted light of the at least one second projection components in each display sub-unit when the at least one second projection component moves on a rotation trajectory of the at least one second projection component; and
the at least one second projection component is configured to project emitted light of a sub-pixel of the at least one second projection component onto the imaging surface to form a second display sub-pixel, and a display viewing angle of the second display sub-pixel is greater than a display viewing angle of the first display sub-pixel.

8. The light field display system of claim 1, further comprising a linear Fresnel film disposed between the plurality of display sub-units and the unidirectional scattering film; wherein
in a second direction, the linear Fresnel film is provided with two edge regions and a central region disposed between the two edge regions, a size of each edge region of the two edge regions is greater than a size of the central region, and the second direction is perpendicular to the first direction; and
in each edge region, a side of the linear Fresnel film adjacent to the plurality of display sub-units comprises a plurality of serrated structures extending in the first direction, and in a respective direction from the central region towards each edge region, slopes of the plurality of serrated structures are equal to or slopes of the plurality of serrated structures gradually increase.

9. The light field display system of claim 1, further comprising a reflector, wherein in a second direction, the reflector is disposed on at least one side of the plurality of display sub-units, and the second direction is perpendicular to the first direction.

10. The light field display system of claim 1, wherein each display sub-unit comprises 2n first projection components, the 2n first projection components are opposite in a radial direction of each display sub-unit two-by-two, and among the 2n first projection components, distances from any two adjacent or opposite first projection components to a center of each display sub-unit are different and less than a second preset value; wherein n is a positive integer.

11. The light field display system of claim 10, wherein each first projection component of the 2n first projection components in each display sub-unit comprises a plurality of monochrome display devices, each monochrome display device of the plurality of monochrome display devices comprises sub-pixels of a same emission color, sub-pixels on different monochrome display devices in a same first projection component have different emission colors, and in a rotation direction of the rotating structure in each display sub-unit, arrangement order of the plurality of monochrome display devices in each first projection component of each display sub-unit is the same.

12. The light field display system of claim 1 or 10, wherein each first projection component in each display sub-unit comprises a multicolor display device, and the multicolor display device comprises sub-pixels of a plurality of different emission colors.

13. The light field display system of claim 1, wherein a light emission surface of the unidirectional scattering film is sequentially provided with a quarter-wave plate, a linear polarizer, an anti-reflective film for visible light, and an infrared reflective film.

14. The light field display system of claim 1, further comprising a calibration module, wherein the calibration module is configured to determine parameters required for the light field display system to display an image at a preset resolution according to a viewing position, and the parameters comprise a display direction angle of a display sub-unit and a display moment of the display sub-unit which correspond to the displayed image.

15. The light field display system of claim 14, further comprising an eye position tracking component, wherein the eye position tracking component is configured to determine eye position information and is electrically connected to the control component; and
the control component is configured to control display of a sub-pixel in a corresponding display sub-unit according to the eye position information fed back by the eye position tracking component.

16. The light field display system of claim 15, further comprising a camera module, wherein a field of view of the camera module is directed towards the plurality of display sub-units, the eye position tracking component and the calibration module are both connected to the camera module, and the camera module is configured to provide image information for the calibration module and the eye position tracking component.

17. The light field display system of claim 1, wherein the plurality of display sub-units form a plane or a curved surface.

18. The light field display system of claim 1, wherein the rotating structure comprises a housing, and the control component is disposed in the housing.

19. A display method for a light field display system, comprising:
determining parameters required for the light field display system to display an image at a preset display resolution; and
determining display sub-pixels of a plurality of display sub-units comprised in the light field display system, display positions of the plurality of display sub-units, and display moments of the plurality of display sub-units according to the parameters;
wherein the light field display system is the light field display system of any one of claims 1 to 18.

20. The display method for the light field display system of claim 19, further comprising:
determining eye position information, wherein the eye position information is acquired by an eye position tracking component electrically connected to the control component; and
wherein determining the display sub-pixels of the plurality of display sub-units comprised in the light field display system, the display positions of the plurality of display sub-units, and the display moments of the plurality of display sub-units according to the parameters comprises:
determining the display sub-pixels, the display positions, and the display moments of the plurality of display sub-units according to the parameters and the eye position information.
